# EUROPEAN PATENT APPLICATION

(11) **EP 4 841 905 A1**
(43) Date of publication of application: **18.11.2026**
(21) Application number: 24924989.7
(22) Date of filing: 09.09.2024
(51) Int. Cl.: H04B 7/06, H04W 72/21, H04W 72/231, H04W 72/232, H04W 8/24, H04L 5/00

(54) **DEVICE AND METHOD FOR CSI REPORTING IN WIRELESS COMMUNICATION SYSTEM**

(30) Priority: 14.02.2024 KR 20240021172
(71) Applicant: Samsung Electronics Co., Ltd., Suwon-si, Gyeonggi-do 16677 (KR)
(72) Inventor: CHO, Seonghyeon, Suwon-si, Gyeonggi-do 16677 (KR); BAIK, Jungsuk, Suwon-si, Gyeonggi-do 16677 (KR); YOON, Hoyoung, Suwon-si, Gyeonggi-do 16677 (KR); LEE, Deokhui, Suwon-si, Gyeonggi-do 16677 (KR)
(74) Representative: Nederlandsch Octrooibureau
(86) International application number: PCT/KR2024/013631
(87) International publication number: WO 2025/173845

(57) **Abstract**

The present disclosure relates to a 5G or 6G communication system for providing higher data transmission rates beyond a previous 4G communication system, such as LTE. A method performed by a terminal in a wireless communication system may comprise the steps of: receiving, from a base station, information for triggering the transmission of an indicator for a change in channel state; transmitting, to the base station, at least one indicator for the change in the channel state on the basis of the information for triggering the transmission of the indicator; and transmitting, to the base station, a measurement report except for data for at least one parameter of which the value has not changed among one or more parameters, wherein the information for triggering the transmission includes information about at least one parameter for the indicator among a plurality of parameters associated with the channel state, and the at least one indicator may indicate whether the value of the at least one parameter has changed.

## Description

### [Technical Field]

The disclosure relates to a wireless communication system (or mobile communication system). Specifically, the disclosure relates to a device and method for performing CSI reporting in a wireless communication system.

### [Background Art]

Considering the development of wireless communication from generation to generation, the technologies have been developed mainly for services targeting humans, such as voice calls, multimedia services, and data services. Following the commercialization of 5G (5th generation) communication systems, it is expected that the number of connected devices will exponentially grow. Increasingly, these will be connected to communication networks. Examples of connected things may include vehicles, robots, drones, home appliances, displays, smart sensors connected to various infrastructures, construction machines, and factory equipment. Mobile devices are expected to evolve in various form-factors, such as augmented reality glasses, virtual reality headsets, and hologram devices. In order to provide various services by connecting hundreds of billions of devices and things in the 6G (6th generation) era, there have been ongoing efforts to develop improved 6G communication systems. For these reasons, 6G communication systems are referred to as beyond-5G systems.

6G communication systems, which are expected to be commercialized around 2030, will have a peak data rate of tera (1,000 giga)-level bit per second (bps) and a radio latency less than 100µsec, and thus will be 50 times as fast as 5G communication systems and have the 1/10 radio latency thereof.

In order to accomplish such a high data rate and an ultra-low latency, it has been considered to implement 6G communication systems in a terahertz (THz) band (for example, 95 gigahertz (GHz) to 3THz bands). It is expected that, due to severer path loss and atmospheric absorption in the terahertz bands than those in mmWave bands introduced in 5G, technologies capable of securing the signal transmission distance (that is, coverage) will become more crucial. It is necessary to develop, as major technologies for securing the coverage, Radio Frequency (RF) elements, antennas, novel waveforms having a better coverage than Orthogonal Frequency Division Multiplexing (OFDM), beamforming and massive Multiple-input Multiple-Output (MIMO), Full Dimensional MIMO (FD-MIMO), array antennas, and multiantenna transmission technologies such as large-scale antennas. In addition, there has been ongoing discussion on new technologies for improving the coverage of terahertz-band signals, such as metamaterial-based lenses and antennas, Orbital Angular Momentum (OAM), and Reconfigurable Intelligent Surface (RIS).

Moreover, in order to improve the spectral efficiency and the overall network performances, the following technologies have been developed for 6G communication systems: a full-duplex technology for enabling an uplink transmission and a downlink transmission to simultaneously use the same frequency resource at the same time; a network technology for utilizing satellites, High-Altitude Platform Stations (HAPS), and the like in an integrated manner; an improved network structure for supporting mobile base stations and the like and enabling network operation optimization and automation and the like; a dynamic spectrum sharing technology via collision avoidance based on a prediction of spectrum usage; an use of Artificial Intelligence (AI) in wireless communication for improvement of overall network operation by utilizing AI from a designing phase for developing 6G and internalizing end-to-end AI support functions; and a next-generation distributed computing technology for overcoming the limit of UE computing ability through reachable superhigh-performance communication and computing resources (such as Mobile Edge Computing (MEC), clouds, and the like) over the network. In addition, through designing new protocols to be used in 6G communication systems, developing mechanisms for implementing a hardware-based security environment and safe use of data, and developing technologies for maintaining privacy, attempts to strengthen the connectivity between devices, optimize the network, promote softwarization of network entities, and increase the openness of wireless communications are continuing.

It is expected that research and development of 6G communication systems in hyper-connectivity, including person to machine (P2M) as well as machine to machine (M2M), will allow the next hyper-connected experience. Particularly, it is expected that services such as truly immersive eXtended Reality (XR), high-fidelity mobile hologram, and digital replica could be provided through 6G communication systems. In addition, services such as remote surgery for security and reliability enhancement, industrial automation, and emergency response will be provided through the 6G communication system such that the technologies could be applied in various fields such as industry, medical care, automobiles, and home appliances.

### [Disclosure of Invention]

### [Technical Problem]

A bit width of a channel state information (CSI) report transmitted by a terminal to a base station may be variable, based on configuration information. In addition, a PMI may have various bit widths according to the number of subbands, the number of antenna ports, the number of oversampling factors, the number of ranks, and/or the type of codebook. Accordingly, overhead of the CSI report may increase in a multi-user (MU) multiple-input multiple-output (MIMO) system, and the terminal may consume a large amount of radio resources in order to perform CSI reporting.

### [Solution to Problem]

According to an embodiment, a method performed by a terminal in a wireless communication system may include receiving, from a base station, information for triggering transmission of an indicator for a change in a channel state, transmitting, to the base station, at least one indicator for the change in the channel state, based on the information for triggering the transmission of the indicator, and transmitting, to the base station, a measurement report excluding data for one or more parameters whose values have not changed, among the at least one parameter, wherein the information for triggering the transmission includes information on at least one parameter for the indicator among a plurality of parameters associated with the channel state, and wherein the at least one indicator indicates whether a value of the at least one parameter has changed.

According to an embodiment, a terminal in a wireless communication system may include a transceiver, and a controller coupled to the transceiver, wherein the controller is configured to receive, from a base station, information for triggering transmission of an indicator for a change in a channel state, transmit, to the base station, at least one indicator for the change in the channel state, based on the information for triggering the transmission of the indicator, and transmit, to the base station, a measurement report excluding data for one or more parameters whose values have not changed, among the at least one parameter, wherein the information for triggering the transmission includes information on at least one parameter for the indicator among a plurality of parameters associated with the channel state, and wherein the at least one indicator indicates whether a value of the at least one parameter has changed.

A method performed by a base station in a wireless communication system may include transmitting, to a terminal, information for triggering an indicator for a change in a channel state, receiving, from the terminal, at least one indicator for the change in the channel state, based on the information for triggering the indicator, and receiving, from the terminal, a measurement report excluding data for one or more parameters whose values have not changed, among the at least one parameter, wherein the information for triggering the indicator includes information on at least one parameter for the indicator among a plurality of parameters associated with the channel state, and wherein the at least one indicator indicates whether a value of the at least one parameter has changed.

According to an embodiment, a base station in a wireless communication system may include a transceiver, and a controller coupled to the transceiver, wherein the controller is configured to transmit, to a terminal, information for triggering an indicator for a change in a channel state, receive, from the terminal, at least one indicator for the change in the channel state, based on the information for triggering the indicator, and receive, from the terminal, a measurement report excluding data for one or more parameters whose values have not changed, among the at least one parameter, wherein the information for triggering the indicator includes information on at least one parameter for the indicator among a plurality of parameters associated with the channel state, and wherein the at least one indicator indicates whether a value of the at least one parameter has changed.

### [Advantageous Effects of Invention]

According to an embodiment, the uplink resource for CSI reporting may be reduced or minimized through simplified CSI reporting.

According to an embodiment, energy of a terminal may be saved through simplified CSI reporting, and uplink resources may be utilized for other data transmission.

Various other effects identified directly or indirectly through the disclosure may be provided.

### [Brief Description of Drawings]

FIG. 1 illustrates a wireless communication system according to an embodiment of the disclosure.
FIG. 2 illustrates a structure of a UE according to an embodiment.
FIG. 3 illustrates a structure of a base station according to an embodiment.
FIG. 4 illustrates a UE for transmitting a channel state change (CSC) indicator according to an embodiment.
FIG. 5 illustrates an operation of a UE for transmitting, to a base station, a measurement report excluding data for at least one parameter indicated by the base station according to an embodiment.
FIG. 6 illustrates a UE for transmitting an indicator for a channel state according to an embodiment.
FIG. 7 illustrates a method in which a UE acquires an indicator for a change in a channel state, based on a plurality of measurement reports according to an embodiment.
FIG. 8 illustrates a method in which a base station transmits information for triggering an indicator for a change in a channel state according to an embodiment.
FIG. 9 illustrates a method in which a MAC layer of a base station counts a CSC instance to activate a CSC indicator for at least one parameter or deactivate an activated CSC indicator according to an embodiment.
FIG. 10 illustrates a field of a CSC indicator according to an embodiment.
FIG. 11 illustrates types of CSC indicators according to an embodiment.
FIG. 12 illustrates a base station allocating uplink resources for simplified CSI reporting and a UE performing CSI reporting according to an embodiment.
FIG. 13 illustrates a method of capability information for a CSC indicator and simplified CSI reporting between a base station and a UE according to an embodiment.

With regard to the description of the drawings, the same or similar reference numerals may be used to refer to the same or similar elements.

### [Mode for the Invention]

Hereinafter, various embodiments of the disclosure will be described with reference to the accompanying drawings. However, this is not intended to limit the disclosure to specific embodiments, and it is to be understood that various modifications, equivalents, and/or alternatives of the embodiments of the disclosure fall within the scope of the disclosure.

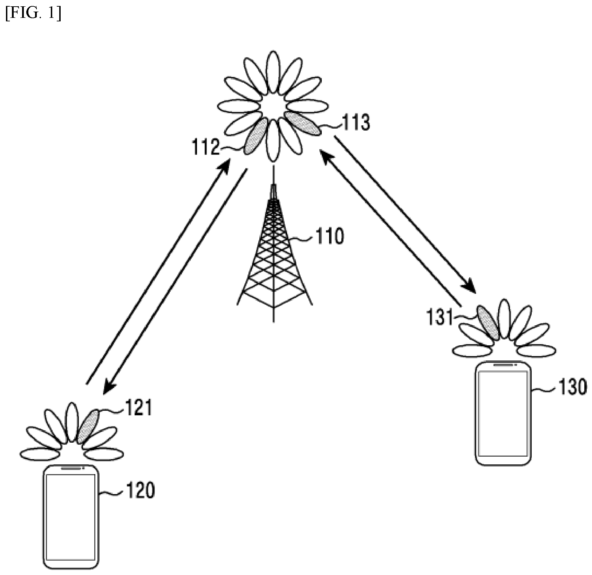

FIG. 1 illustrates a wireless communication system according to an embodiment of the disclosure.

FIG. 1 illustrates a base station 110, a first UE 120, and/or a second UE 130, as some of nodes using a radio channel in the wireless communication system. FIG. 1 illustrates only one base station, but this is merely an example. Other base stations identical or similar to the base station 110 may be further included in the wireless communication system of FIG. 1.

The base station 110 is a network infrastructure which provides radio access to the UEs 120 and 130. The base station 110 may have coverage which is defined by a predetermined geographical area, based on the distance within which the base station 110 can transmits signals. In addition to the term "base station", the base station 110 may be referred to as an "access point (AP)", an "eNodeB (eNB)", a "gNodeB (gNB)", a "5th generation node (5G node)", a "wireless point", a "transmission/reception point (TRP)", or other terms having technical meanings equivalent thereto.

Each of the first UE 120 and the second UE 130 is a device used by a user, and may perform communication with the base station 110 via a radio channel. At least one of the UE 120 and the UE 130 may be operated without the user's involvement. For example, at least one of the first UE 120 and the second UE 130 may be a device which performs machine type communication (MTC), and may not be carried by the user. In addition to the term "terminal", each of the first UE 120 and the second UE 130 may be referred to as a "user equipment (UE)", a "mobile station", a "subscriber station", a "customer-premises equipment (CPE)", a "remote terminal", a "wireless terminal", an "electronic device", a "user device", or other terms having technical meanings equivalent thereto.

The base station 110, the first UE 120, and the second UE 130 may transmit and/or receive wireless signals in millimeter wave (mmWave) bands (e.g., 28GHz, 30GHz, 38GHz, and 60GHz). In this case, in order to improve channel gain, the base station 110, the first UE 120, and the second UE 130 may perform beamforming.

The beamforming may include transmission beamforming and/or reception beamforming. That is, the base station 110, the first UE 120, and the second UE 130 may assign directivity to a transmission signal or a reception signal. To assign directivity to a transmission signal, the base station 110 and/or the UEs 120 and 130 may select serving beams 112, 113, 121, and 131 through a beam search or beam management procedure. After the serving beams 112, 113, 121, and 131 are selected, subsequent communication may be performed through resources having a quasi co-located (QCL) relationship with resources used to transmit the serving beams 112, 113, 121, and 131.

Each of the base station 110, the first UE 120, and the second UE 130 of the disclosure may be a transmitting apparatus, a transmitting node, a receiving node, a receiving apparatus, and/or a receiving node. For example, the base station 110 may transmit a radio frequency (RF) signal to the first UE 120. The base station 110 may receive an RF signal from the first UE 120. As another example, the first UE 120 may transmit an RF signal to the base station 110 or the second UE 130. The first UE 120 may receive an RF signal from the base station 110 or the second UE 130.

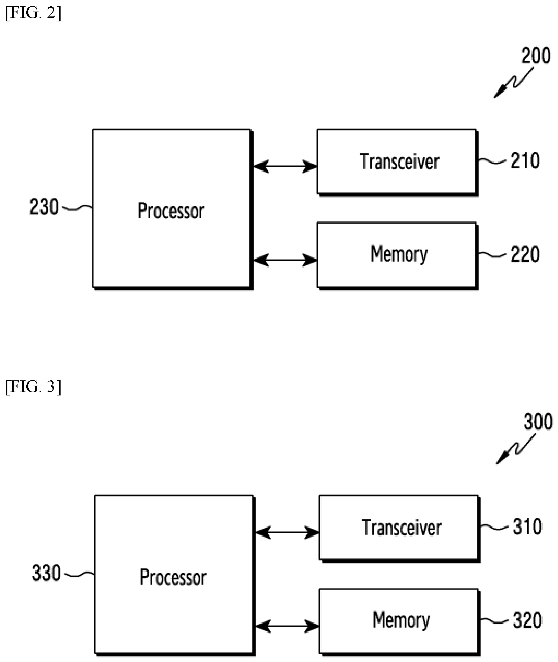

FIG. 2 illustrates a structure of a UE according to an embodiment.

Referring to FIG. 2, the UE 200 according to an embodiment may include a transceiver 210, a memory 220, and/or a processor 230. Although the UE 200 is described herein as including the transceiver 210, the memory 220, and/or the processor 230, this is merely an example. For example, the UE 200 may further include components other than the transceiver 210, the memory 220, and the processor 230.

According to an embodiment, each of the transceiver 210, the memory 220, and the processor 230 may be implemented as a separate chip. However, this is merely an example, and the transceiver 210, the memory 220, and/or the processor 230 may be implemented as a single chip.

According to an embodiment, the transceiver 210 may include at least one transmitter and/or at least one receiver. For example, the transceiver 210 may include an RF transmitter for amplifying and up-converting the frequency of a transmitted signal. The transceiver 210 may include an RF receiver for downconverting and low-noise amplifying the frequency of a received signal.

The components of the transceiver 210 set forth herein are merely an example, and the components of the transceiver 210 are not limited to the RF transmitter and the RF receiver. For example, the transceiver 210 may further include a coupler for ensuring isolation between the RF transmitter and the RF receiver.

According to an embodiment, the transceiver 210 may transmit or receive a signal to or from the processor 230. For example, the transceiver 210 may transmit or deliver an RF signal, received via a radio channel, to the processor 230. The transceiver 210 may receive an RF signal from the processor 230 or the processor 230 may deliver an RF signal to the transceiver 210.

According to an embodiment, the transceiver 210 may be referred to as a "UE transmitter" or a "UE receiver".

According to an embodiment, the transceiver 210 may transmit a signal to a base station (e.g., the base station 110 in FIG. 1) or a network entity (e.g., user plane function (UPF) entity) or receive a signal from the base station or the network entity. In an embodiment, the transmitted or received signal may include a control signal or data.

According to an embodiment, the memory 220 may store programs and data necessary for the operations of the UE 200. For example, the memory 220 may be a non-transitory memory, and programs stored in the non-transitory memory may be organically coupled to hardware components (e.g., the processor 230 or the transceiver 210) of the UE 200. The memory 220 may store control information or data including a signal acquired by the UE 200. In an embodiment, the memory 220 may include a read-only memory (ROM), a random access memory (RAM), a hard disk, a CD-ROM, a DVD, or storage media.

According to an embodiment, the processor 230 may include one processor or multiple processors. For example, the processor 230 may include a communication processor. For example, the processor 230 may include a communication processor and/or an application processor.

According to an embodiment, the processor 230 may control a series of processes performed by the UE 200. For example, the transceiver 210 may receive a data signal including control information transmitted by the base station or the network entity. The processor 230 may process the received control signal and data signal.

The term "processor" in the disclosure may be replaced with various terms referring to components for executing or performing the operations of the UE 200. For example, the processor may be replaced with the term "controller" or "computing circuit".

The UE 200 of the disclosure may correspond to the first UE 120 and/or the second UE 130 in FIG. 1.

FIG. 3 illustrates a structure of a base station according to an embodiment.

Referring to FIG. 3, the base station 300 according to an embodiment may include a transceiver 310, a memory 320, and/or a processor 330. Although the base station 300 is described herein as including the transceiver 310, the memory 320, and/or the processor 330, this is merely an example. For example, the base station 300 may further include components other than the transceiver 310, the memory 320, and the processor 330.

According to an embodiment, each of the transceiver 310, the memory 320, and the processor 330 may be implemented as a separate chip. However, this is merely an example, and the transceiver 310, the memory 320, and/or the processor 330 may be implemented as a single chip.

According to an embodiment, the transceiver 310 may include at least one transmitter and/or at least one receiver. For example, the transceiver 310 may include an RF transmitter for amplifying and up-converting the frequency of a transmitted signal. The transceiver 310 may include an RF receiver for downconverting and low-noise amplifying the frequency of a received signal.

The components of the transceiver 310 set forth herein are merely an example, and the components of the transceiver 310 are not limited to the RF transmitter and the RF receiver. For example, the transceiver 310 may further include a coupler for ensuring isolation between the RF transmitter and the RF receiver.

According to an embodiment, the transceiver 310 may transmit or receive a signal to or from the processor 330. For example, the transceiver 310 may transmit or deliver an RF signal, received via a radio channel, to the processor 330. The transceiver 310 may receive an RF signal from the processor 330 or the processor 330 may deliver an RF signal to the transceiver 310.

According to an embodiment, the transceiver 310 may be referred to as a "base station transmitter" or a "base station receiver".

According to an embodiment, the transceiver 310 may transmit a signal to the UE 200 or receive a signal from the UE 200. In an embodiment, the transmitted or received signal may include a control signal or data.

According to an embodiment, the memory 320 may store programs and data necessary for the operations of the base station 300. For example, the memory 320 may be a non-transitory memory, and programs stored in the non-transitory memory may be organically coupled to hardware components (e.g., the processor 330 or the transceiver 310) of the base station 300. The memory 320 may store control information or data including a signal acquired by the base station 300. In an embodiment, the memory 320 may include a read-only memory (ROM), a random access memory (RAM), a hard disk, a CD-ROM, a DVD, or storage media.

According to an embodiment, the processor 330 may include one processor or multiple processors. For example, the processor 330 may include a communication processor. For example, the processor 330 may include a communication processor and/or an application processor.

According to an embodiment, the processor 330 may control a series of processes performed by the base station 300. For example, the transceiver 310 may receive a data signal including control information transmitted by the base station or the network entity. The processor 330 may process the received control signal and data signal.

The term "processor" in the disclosure may be replaced with various terms referring to components for executing or performing the operations of the base station 300. For example, the processor may be replaced with the term "controller" or "computing unit".

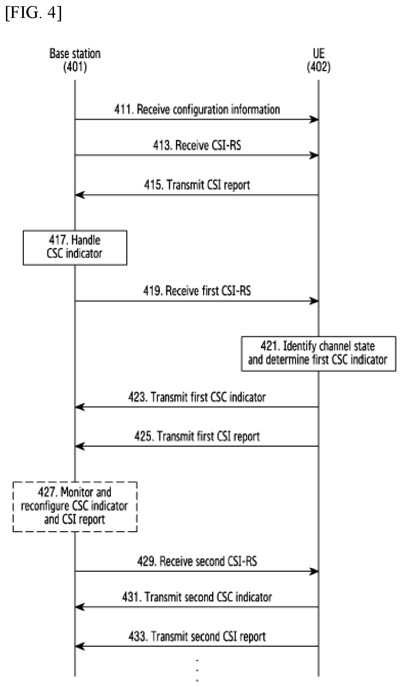

FIG. 4 illustrates a UE for transmitting a channel state change (CSC) indicator according to an embodiment.

Referring to FIG. 4, a wireless communication system according to an embodiment may include a base station 401 and/or a UE 402. For example, the base station 401 may correspond to the base station 300 of FIG. 3, and the UE 402 may correspond to the UE 200 of FIG. 2.

According to an embodiment, the UE 402 may receive configuration information from the base station 401 in operation 411. For example, the base station 401 may transmit configuration information including information on channel state information (CSI) (or measurement) reporting to the UE 402.

According to an embodiment, the configuration information may be associated with a channel state between the base station 401 and the UE 402, and may include information on a plurality of parameters subject to measurement reporting. For example, a plurality of parameters associated with the channel state between the base station 401 and the UE 402 may include a layer indicator (LI), a channel quality indicator (CQI), a precoding matrix indicator (PMI), and/or a rank indicator (RI). The base station 401 may indicate, through the configuration information, the plurality of parameters subject to measurement reporting (e.g., CSI reporting), and the UE 402 may transmit, to the base station 401, a CSI report (or a measurement report) including data for the plurality of parameters included in the configuration information.

For example, the configuration information (e.g., CSI-ReportConfig) transmitted in operation 411 may include at least one of information elements (IEs) included in Table 1. The configuration information may include information (e.g., reportQuantity) regarding parameters subject to CSI reporting (or measurement reporting). For example, the parameters subject to CSI reporting may include at least one of cri-RI-PMI-CQI, cri-RI-LI-PMI-CQI, cri-RI-i1, cri-RI-i1-CQI, cri-RI-CQI, cri-RSRP, ssb-index-RSRP, cri-SINR, and ssb-index-SINR.

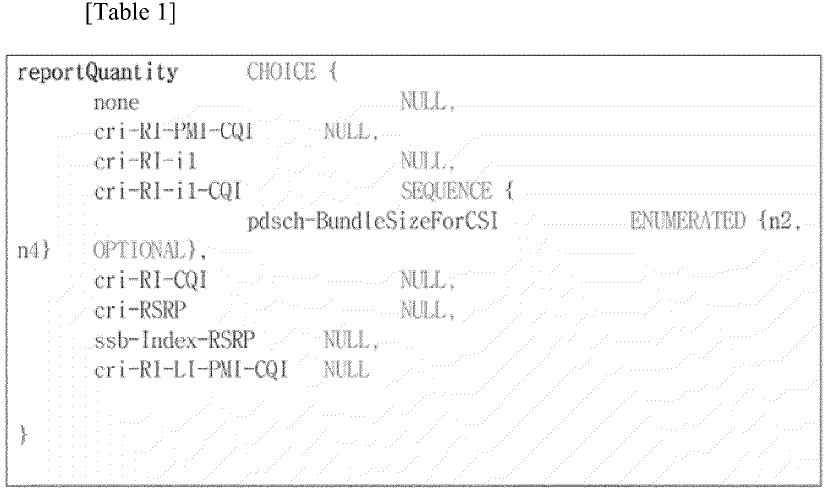

Table 2 is a table showing the relationship among parameters subject to CSI reporting. For example, reported parameters (e.g., reporting parameters) may be calculated or obtained based on other parameters (e.g., dependencies). However, the parameters subject to CSI reporting are not limited those shown in Table 2.

**[Table 2]**

| Reporting parameters | Dependencies |
|---|---|
| LI | CQI, PMI, CRI, RI |
| CQI | PMI, RI, CRI |
| PMI | RI, CRI |
| RI | CRI |
| LI | CQI, PMI, CRI, RI |

According to an embodiment, the configuration information transmitted in operation 411 may include information for enabling transmission of a CSC indicator. For example, the configuration information may include information for enabling, by the UE 402, the CSC indicator. For example, the UE 402 may transmit the CSC indicator to the base station 401, based on the information for enabling the CSC indicator.

According to an embodiment, the configuration information may include at least some of information elements (IEs) included in Table 3. For example, configuration information for configuring a CSI report (or a measurement report) may include information (e.g., simplifiedReportMode) for enabling the UE 402 to transmit a CSC indicator. The information for enabling transmission of the CSC indicator may include configuration information (e.g., CSC-indicatorConfig) for the CSC indicator.

In another example, configuration information for configuring a CSI report may include information (e.g., simplifcatedReportMode) for enabling simplified reporting of the UE 402, and the information for enabling the simplified reporting may include configuration information (e.g., CSC-indicatorConfig) for a CSC indicator.

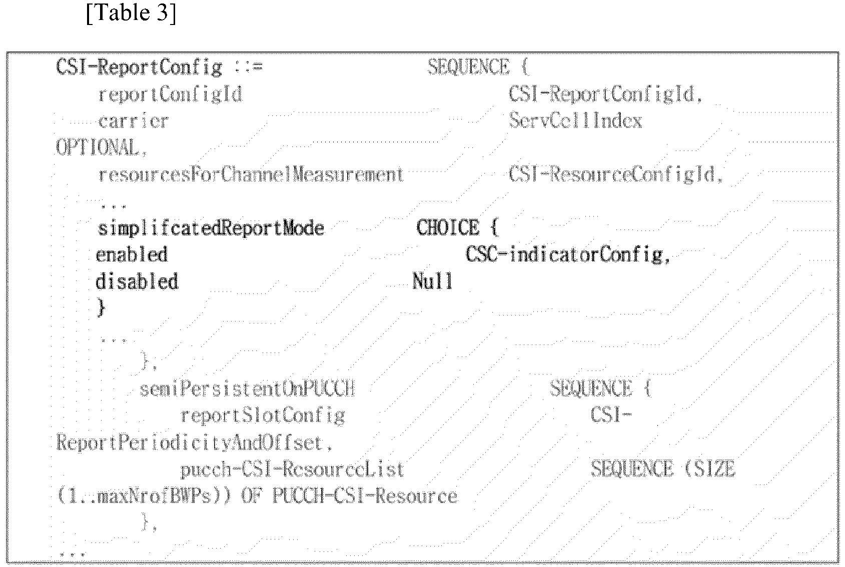

According to an embodiment, configuration information (e.g., CSC-indicatorConfig) for a CSC indicator may include information on an initial CSC indicator field. For example, the configuration information for the CSC indicator may include information (e.g., CSCindicatorParameter) regarding at least one parameter included in the CSC indicator. For example, the configuration information for the CSC indicator may indicate, to the UE 402, a plurality of parameters (e.g., RI, CRI, CQI, PMI) to be included in the CSC indicator, as shown in Table 4 below.

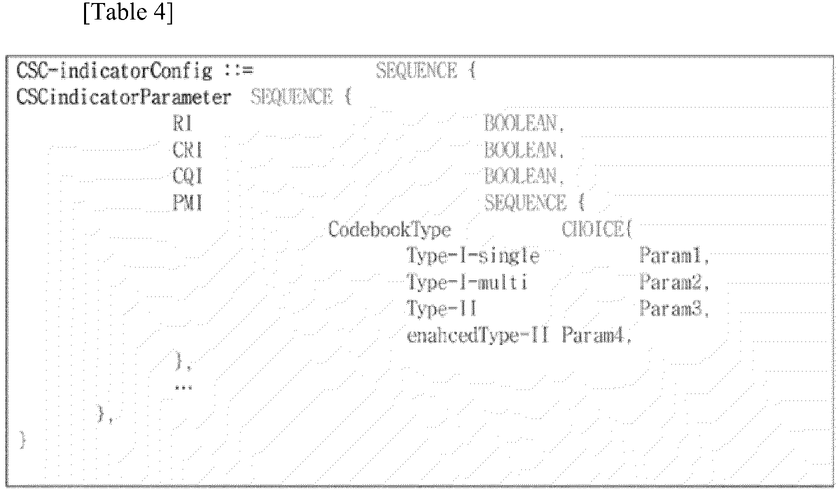

According to an embodiment, at least one parameter included in a CSC indicator may be changed by the base station 401. For example, based on configuration information for the CSC indicator, the at least one parameter included in the CSC indicator may be determined as first parameters (e.g., RI, CRI, CQI, and PMI) (or, initial parameters). The UE 402 may transmit, to the base station 401 through the CSC indicator, information on whether each of the first parameters (or, the initial parameters) has changed. In this case, the base station 401 may change the at least one parameter included in the CSC indicator from the first parameters to second parameters (e.g., CQI and PMI). The base station 401 may transmit, to the UE 402, information on the second parameters through downlink control information (DCI) or a radio resource control (RRC) message. The UE 402 may transmit, to the base station 401 through the CSC indicator, information on whether each of the second parameters has changed.

According to an embodiment, the base station 401 may transmit, to the UE 402, configuration information including information on the CSC indicator in case that a designated condition (e.g., capability information, mobility, presence or absence of an obstacle, and the number of times of channel change) is satisfied. For example, based on whether the UE 402 has a capability for performing simplified CSI reporting and/or a CSC indicator, the base station 401 may transmit, to the UE 402, configuration information including information on the CSC indicator. In another example, in case that mobility of the UE 402 is equal to or less than a specified value, the base station 401 may transmit, to the UE 402, configuration information including information on the CSC indicator. In case that mobility of the UE 402 is low, time correlation may be relatively high, and a possibility of changes in a plurality of parameters may be low. In this case, the base station 401 may identify that consumption of radio resources can be reduced by using the CSC indicator, and may transmit, to the UE 402, configuration information including information on the CSC indicator.

In another example, when there is no other object (e.g., an obstacle) within a designated distance from the UE 402 (e.g., a line-of-sight (LOS) state), the base station 401 may transmit, to the UE 402, configuration information including information on a CSC indicator. When there is no other object within a designated distance from the UE 402, a possibility of changes in a plurality of parameters may be low, and the base station 401 may transmit, to the UE 402, configuration information including information on the CSC indicator in order to reduce consumption of radio resources. For example, when the number of times of channel change between the UE 402 and the base station 401 is less than or equal to a designated value, the base station 401 may transmit, to the UE 402, configuration information including information on the CSC indicator.

According to an embodiment, the UE 402 may receive a CSI reference signal (RS) in operation 413. For example, the base station 401 may transmit at least one CSI-RS on at least one resource to the UE 402.

According to an embodiment, the UE 402 may transmit a CSI report to the base station 401, based on the CSI-RS received in operation 415. For example, the UE 402 may identify information on a channel state between the UE 402 and the base station 401, based on at least one received CSI-RS. For example, information on a channel state may include data for a plurality of parameters. The UE 402 may transmit, to the base station 401, at least one CSI report including data for a plurality of parameters. For example, the plurality of parameters may be configured for the UE 402, based on the configuration information in operation 411.

According to an embodiment, the base station 401 may perform CSC indicator handling in operation 417. For example, the base station 401 may determine, based on the plurality of CSI reports (or measurement reports) transmitted by the UE 402, whether the UE 402 is to transmit a CSC indicator and/or whether the UE 402 is to transmit a simplified CSI report. For example, the simplified CSI report may be referred to as a CSI report in which data for at least some of at least one parameter included in the CSC indicator is not included. In another example, the simplified CSI report may be referred to as a CSI report in which data for at least some of at least one parameter included in the CSC indicator is omitted or excluded.

For example, the base station 401 may identify, from among a plurality of parameters, at least one parameter determined to have not changed a designated number of times or more, based on a plurality of CSI reports transmitted by the UE 402. The base station 401 may transmit, to the UE 402, information on the at least one parameter and determine that the UE 402 is to report, through a CSC indicator, whether a value of the at least one parameter has changed.

For example, a medium access control (MAC) layer of the base station 401 may identify whether CSC instances are received a designated number of times or more for a plurality of parameters from a physical (PHY) layer. The MAC layer may identify, from among the plurality of parameters, at least one parameter for which CSC instances are received a designated number of times or more, and may determine that the UE 402 is to report, through a CSC indicator, whether a value of the identified at least one parameter has changed.

In this case, the base station 401 may transmit, to the UE 402, a message (or an activation message) requesting a CSC indicator for the at least one parameter. Based on receiving the message requesting the CSC indicator, the UE 402 may report, through the CSC indicator, whether a value of the at least one parameter has changed, and the UE 402 may perform simplified CSI reporting for one or more parameters whose values have not changed, among the at least one parameter. That is, in the simplified CSI reporting, data for one or more parameters whose values have not changed, among the at least one parameter may be omitted.

In an example, a CSC instance may be generated, based on a plurality of CSI reports (e.g., the CSI reports received in operation 415). For example, the base station 401 may identify whether a plurality of parameters included in a plurality of CSI reports have changed. When a first parameter (e.g., CQI) among the plurality of parameters has changed, a CSC instance for the first parameter may not be delivered to the MAC layer, and when the first parameter has not changed, a CSC instance for the first parameter may be delivered to the MAC layer. Similarly, when a value of a second parameter (e.g., RI) among the plurality of parameters has changed, a CSC instance for the second parameter may not be delivered to the MAC layer, and when the second parameter has not changed, a CSC instance for the second parameter may be delivered to the MAC layer.

That is, the MAC layer of the base station 401 may determine, for each of a plurality of parameters, whether CSC instances have been received a designated number of times or more, and may determine whether to request reporting through a CSC indicator for each of the plurality of parameters. For example, when CSC instances have been received a designated number of times or more for a first parameter (e.g., CQI), the MAC layer of the base station 401 may request the UE 402 to report, through a CSC indicator, whether a value of the first parameter has changed. On the other hand, when CSC instances have not been received a designated number of times or more for a second parameter (e.g., RI), the MAC layer of the base station 401 may request the UE 402 not to report the second parameter through a CSC indicator.

According to an embodiment, the UE 402 may receive a first CSI-RS in operation 419. For example, the base station 401 may transmit, to the UE 402, the first CSI-RS on at least one resource for channel estimation.

According to an embodiment, the UE 402 may identify a channel state and determine a first CSC indicator in operation 421. For example, the UE 402 may identify a channel state, based on a first CSI-RS, and determine the first CSC indicator to be transmitted to the base station 401. For example, the UE 402 may identify a first channel state corresponding to a first time point, based on the first CSI-RS received at the first time point, and may identify an initial channel state corresponding to an initial time point, based on a CSI-RS (e.g., the CSI-RS received in operation 413) received at the initial time point before the first time point.

The UE 402 may determine a first CSC indicator by comparing the first channel state and the initial channel state. For example, the first CSC indicator may include information on whether a value of each of at least one parameter has changed at the first time point as compared with the initial time point. For example, in case that a value of each of the at least one parameter has not changed, a field value of the first CSC indicator may be 0, and in case that a value of each of the at least one parameter has changed, the field value of the first CSC indicator may be 1. However, the field values are merely examples, and the disclosure is not limited thereto. For example, in case that a value of the parameter has changed, a field value of the first CSC indicator may be 0, and in case that a value of the parameter has not changed, the field value of the first CSC indicator may be 1. In another example, when a parameter value has not changed, the field value of the first CSC indicator may be configured as "true".

According to an embodiment, an operation in which the UE 402 compares channel states may substantially correspond to an operation of comparing values of a plurality of parameters associated with the channel states. For example, the UE 402 may compare values of a plurality of parameters associated with a first channel state and values of a plurality of parameters associated with an initial channel state. For example, when a difference between a value of a first parameter (e.g., CQI) at a first time point and a value of the first parameter (e.g., CQI) at an initial time point is greater than or equal to a threshold value, the UE 402 may determine that the value of the first parameter (e.g., CQI) has changed at the first time point. That is, the UE 402 may determine that the channel state has changed.

In another example, when a difference between a value of a second parameter (e.g., RI) at the first time point and a value of the second parameter at the initial time point is greater than or equal to a threshold value, the UE 402 may determine that the value of the second parameter (e.g., RI) has changed at the first time point. That is, the UE 402 may determine that the channel state has changed.

According to an embodiment, the UE 402 may transmit a first CSC indicator in operation 423. For example, the UE 402 may transmit, to the base station 401, the first CSC indicator determined in operation 421. For example, the first CSC indicator may have a field value of "0" for a first parameter (e.g., CQI). In this case, the base station 401 may identify that the value of the first parameter (e.g., CQI) has not substantially changed at the initial time point and the first time point. In another example, the first CSC indicator may have a field value of "1" for a second parameter (e.g., RI). In this case, the base station 401 may identify that the value of the second parameter has changed at the initial time point and the first time point.

According to an embodiment, the UE 402 may transmit a first CSI report (or a measurement report) in operation 425. For example, the first CSI report may be a simplified report.

For example, the UE 402 may transmit a first CSI report in response to the first CSI-RS, based on a request for simplified CSI reporting (or an activation message for a CSC indicator) received from the base station 401 in operation 417. For example, the UE 402 may be configured, through the configuration information of operation 411, to transmit a measurement report for a plurality of parameters (e.g., CQI, PMI, RI, and/or LI). The UE 402 may receive, in operation 417, information on at least one parameter (e.g., CQI) among the plurality of parameters as an activation message for the CSC indicator. In this case, the UE 402 may transmit, to the base station 401, a CSI report excluding data for one or more parameters whose values have not changed, among the at least one parameter. That is, the UE 402 may identify, from among the at least one parameter transmitted from the base station 401, a parameter whose value has changed (e.g., an unstable parameter) and a parameter whose value has not changed (e.g., a stable parameter). The UE 402 may transmit a CSI report excluding data for a parameter whose value has not changed, among the at least one parameter. That is, the UE 402 may transmit a CSI report including data for a parameter whose value has changed, among the at least one parameter.

For example, the UE 402 may transmit, to the base station 401, a first CSI report that does not include data for a parameter among the at least one parameter, for which the first CSC indicator indicates that no change has occurred.

According to an embodiment, as the UE 402 transmits a CSI report excluding data for one or more parameters whose values have not changed, among the at least one parameter, the base station 401 may reduce or minimize radio resources used for the CSI report. As data for the one or more parameters having no change in value is omitted, newly secured radio resources may be used for transmitting other data between the UE 402 and the base station 401 on a physical uplink shared channel (PUSCH).

According to an embodiment, the base station 401 may perform monitoring and reconfiguration of a CSC indicator and a CSI report in operation 427. For example, the base station 401 may monitor values (e.g., field values) reported through the CSC indicator, and may, based on the values, reconfigure types of parameters reported through the CSC indicator. For example, the base station 401 may monitor the CSI report and may perform reconfiguration of the CSI report, based on values of parameters reported through the CSI report. That is, the base station 401 may reconfigure types of parameters subject to CSI reporting (or types of parameters subject to omission).

For example, the base station 401 may change, through a radio resource control (RRC) message (e.g., an RRC reconfiguration message), types of at least one parameter subject to reporting through a CSC indicator. However, in the disclosure, types of the at least one parameter reported through the CSC indicator may be changed in various manners. For example, the base station 401 may change, through a MAC control element (CE) and/or downlink control information (DCI), types of at least one parameter subject to reporting.

For example, the base station 401 may transmit, through an RRC message, information (or a deactivation message) for deactivating transmission of a CSC indicator for at least one parameter and simplified CSI reporting. That is, the base station 401 may transmit information requesting the UE 402 to transmit a CSI report including data for one or more parameters omitted from the simplified CSI report. Based on the information requesting transmission of the data for the one or more parameters, the UE 402 may transmit, to the base station 401, a CSI report including data for the one or more parameters.

According to an embodiment, in operation 429, the UE 402 may receive a second CSI-RS from the base station 401. For example, the base station 401 may transmit the second CSI-RS to the UE 402 on at least one resource. For example, the UE 402 may receive the second CSI-RS at a third time point.

According to an embodiment, the UE 402 may transmit a second CSC indicator in operation 431. For example, the UE 402 may transmit the second CSC indicator, based on the second CSI-RS. For example, the UE 402 may identify a first channel state identified based on the first CSI-RS and a second channel state identified based on the second CSI-RS. The UE 402 may compare the first channel state and the second channel state and transmit the second CSC indicator to the base station 401. For example, the UE 402 may identify at least one first parameter identified based on the first CSI-RS and at least one second parameter identified based on the second CSI-RS. The UE 402 may compare values of the at least one first parameter and values of the at least one second parameter and determine whether a difference between a value of the at least one first parameter and a value of the at least one second parameter is greater than or equal to a threshold value. The UE 402 may identify that values of the at least one parameter have changed at the third time point as compared with the first time point when, for each of the at least one parameter, a difference between a value of the at least one first parameter and a value of the at least one second parameter is greater than or equal to the threshold value.

According to an embodiment, a case in which a value of at least one parameter (e.g., CQI) changes may be referred to as a case in which a channel state between the base station 401 and the UE 402 has changed.

According to an embodiment, the UE 402 may transmit a second CSI report in operation 433. For example, the UE 402 may transmit a second CSI report (e.g., a simplified report), based on the second CSI-RS. For example, in the second CSI report, data for one or more parameters whose values have not changed, among the at least one parameter may be omitted. For example, in the second CSI report, data for one or more parameters among the at least one parameter, for which the second CSC indicator indicates that no change has occurred, may be omitted.

For example, in operation 427, when the base station 401 transmits, to the UE 402, a message for deactivating or releasing simplified CSI reporting, the UE 402 may transmit a second CSI report including data for a plurality of parameters. That is, the UE 402 may transmit, to the base station 401, a second CSI report including data for one or more parameters whose values have not changed, among the at least one parameter.

According to an embodiment, the base station 401 may monitor whether a channel state has changed through a CSC indicator, and based on the monitoring, consumption of radio resources may be reduced or minimized by adaptively (or flexibly) determining parameters to be reported through the CSC indicator. Likewise, the base station 401 may monitor the channel state, and based on the monitoring, consumption of radio resources may be reduced or minimized by adaptively determining parameters to be omitted by simplified CSI reporting or parameters to be reported by simplified CSI reporting.

In FIG. 4 of the disclosure, transmission of the first CSC indicator and transmission of the first CSI report have been described as separate operations, but this is merely an example. For example, the first CSC indicator and the first CSI report may be included in one message and transmitted from the UE 402 to the base station 401.

In the disclosure, a plurality of parameters for a CSI report indicated based on configuration information and at least one parameter included in a CSC indicator may be substantially identical. However, the disclosure is not limited thereto, and the plurality of parameters for the CSI report may include the at least one parameter included in the CSC indicator.

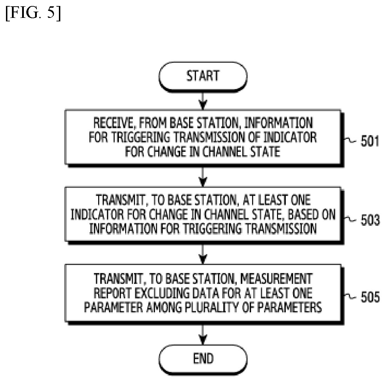

FIG. 5 illustrates an operation of a UE for transmitting, to a base station, a measurement report excluding data for one or more parameters whose values have changed, among at least one parameter indicated by the base station, according to an embodiment.

Referring to FIG. 5, in operation 501, the UE 402 according to an embodiment may receive, from the base station 401, information for triggering transmission of an indicator (e.g., a CSC indicator) regarding a change in a channel state. For example, the base station 401 may transmit, to the UE 402, information for triggering the UE 402 to transmit an indicator (e.g., a CSC indicator) indicating whether the channel state has changed and/or simplified CSI reporting. In another example, the base station 401 may transmit, to the UE 402, a message (or an activation message) for enabling transmission of a CSC indicator and/or simplified CSI reporting.

In the disclosure, simplified CSI reporting may be referred to as CSI reporting excluding data for one or more parameters whose values have not changed, among the at least one parameter. For example, the UE 402 may be instructed, through configuration information, to perform CSI reporting for a plurality of parameters (e.g., CQI, PMI, and RI), and thereafter, based on information for triggering an indicator regarding a channel change, the base station 401 may instruct the UE 402 to report, through a CSC indicator, at least one parameter (e.g., CQI and PMI). In this case, the UE 402 may transmit, to the base station 401, simplified CSI reporting that does not include data for one or more parameters (e.g., CQI) whose values have not changed, among the at least one parameter (e.g., CQI and PMI).

According to an embodiment, in operation 503, the UE 402 may transmit at least one indicator (e.g., a CSC indicator) regarding a change in a channel state to the base station 401, based on the information for triggering transmission. For example, the configuration information may include configuration information (e.g., CSC-indicatorConfig) for an indicator regarding a change in a channel state, and the UE 402 may transmit at least one indicator to the base station 401, based on the configuration information for the indicator. In this case, the at least one indicator regarding the change in the channel state may correspond to the CSI-RS transmitted by the base station 401. That is, the UE 402 may transmit an indicator of a change in a channel state and/or a CSI report (or a measurement report) in response to the base station 401 transmitting a CSI-RS.

For example, the base station 401 may transmit a first CSI-RS to the UE 402 at a first time point, and may transmit a second CSI-RS to the UE 402 at a second time point before the first time point. The UE 402 may transmit the first CSC indicator, based on the first CSI-RS, and may transmit the second CSC indicator, based on the second CSI-RS.

In an example, the first CSC indicator may indicate whether there is a difference between a first channel state at a first time point and a second channel state at a second time point. That is, the first CSC indicator may indicate whether the channel state has changed at the first time point as compared with the second time point. In this case, the first CSC indicator may indicate, for each of the at least one parameter, whether a value of the parameter has changed. For example, when the CQI value has changed at the first time point as compared with the second time point, a CQI field value of the first CSC indicator may be "1", and when the CQI value has not changed at the first time point as compared with the second time point, the CQI field value may be "0". For example, when an RI value has changed at the first time point as compared with the second time point, an RI field value of the first CSC indicator may be "1", and when the RI value has not changed at the first time point as compared with the second time point, the RI field value may be "0".

According to an embodiment, in operation 505, the UE 402 may transmit, to the base station 401, a measurement report excluding data for one or more parameters whose values have not changed, among the at least one parameter. For example, the UE 402 may transmit simplified CSI reporting (or a simplified measurement report) to the base station 401, and the simplified CSI reporting may not include data for one or more parameters whose values have not changed, among the at least one parameter. For example, the at least one parameter may be a parameter subject to reporting through a CSC indicator.

A request for a measurement report excluding data for the at least one parameter described with reference to FIG. 5 of the disclosure may substantially correspond to the simplified CSI reporting request of FIG. 4.

In FIG. 5 of the disclosure, CQI and RI are described as examples of parameters subject to CSI reporting, but this is merely an example. For example, parameters subject to CSI reporting may include CQI, RI, CRI, and/or PMI. In another example, CQI is described as an example of a parameter omitted from CSI reporting, but this is merely an example. For example, parameters omitted from CSI reporting may include CQI, RI, CRI, and/or PMI. In addition, when data for PMI is omitted, data for PMI may be classified by layers, and all of the layers may be omitted or only some of the layers may be omitted.

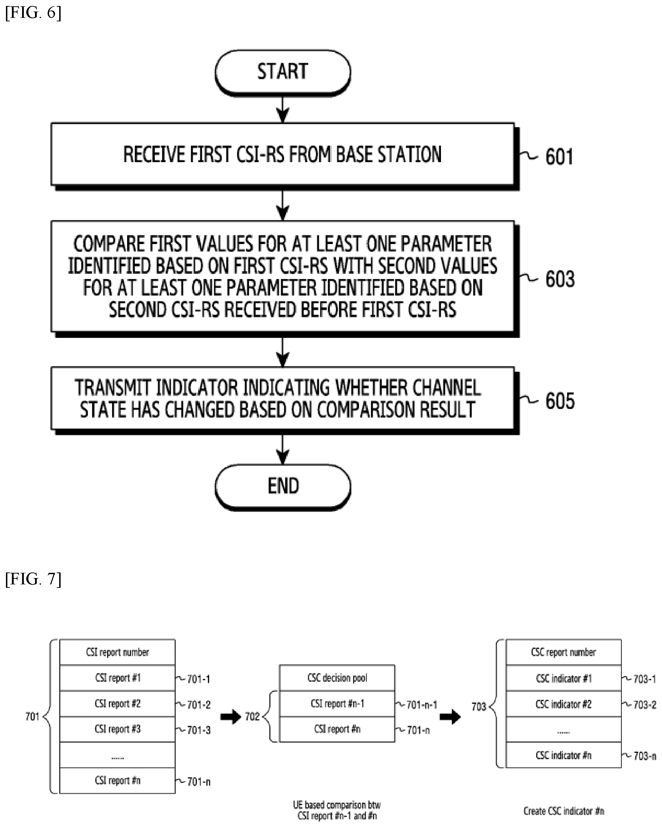

FIG. 6 illustrates a UE for transmitting an indicator for a channel state according to an embodiment.

Referring to FIG. 6, the UE 402 according to an embodiment may receive a first CSI-RS from the base station 401 in operation 601. For example, the UE 402 may receive a first CSI-RS corresponding to the first time point from the base station 401.

According to an embodiment, in operation 602, the UE 402 may compare first values for at least one parameter (e.g., CQI and RI) identified based on a first CSI-RS with second values for the at least one parameter (e.g., CQI and RI) identified based on a second CSI-RS received before the first CSI-RS. For example, the UE 402 may receive the second CSI-RS corresponding to a second time point before the first time point, and may obtain second values for each of at least one parameter (e.g., CQI and RI) based on the second CSI-RS. The UE 402 may obtain first values for each of at least one parameter (e.g., CQI and RI) based on the first CSI-RS. In this case, the UE 402 may compare the first values with the second values, and may identify whether there is a difference between the first values and the second values.

According to an embodiment, at least one parameter (e.g., CQI and RI) may be a parameter indicated by the base station 401 among a plurality of parameters (e.g., QCI, CRI, RI, and/or PMI) subject to CSI reporting. For example, the at least one parameter may be a parameter reported through a CSC indicator in operation 417 of FIG. 4.

According to an embodiment, the UE 402 may identify whether the channel state has changed by comparing a difference between the first values and the second values with a threshold value. When a difference between the first values and the second values is less than or equal to a threshold value, the UE 402 may identify that at least one parameter has not changed at the first time point as compared with the second time point. For example, in the case that a difference between the first CQI value corresponding to the first time point and the second CQI value corresponding to the second time point is less than or equal to a threshold value, the UE 402 may identify that the CQI value has not changed at the first time point as compared with the second time point. When the difference between the first PMI value corresponding to the first time point and the second PMI value corresponding to the second time point is less than or equal to a threshold value, the UE 402 may identify that the PMI value has not changed at the first time point as compared with the second time point. For example, when the value of at least one parameter has not changed, the UE 402 may identify that the channel state between the base station 401 and the UE 402 has not changed.

The UE 402 may identify that at least one parameter has changed at a first time point as compared with a second time point when a difference between first values and second values exceeds a threshold value. For example, when a difference between a first CQI value corresponding to a first time point and a second CQI value corresponding to a second time point exceeds a threshold value, the UE 402 may identify that the CQI value has changed at the first time point as compared with the second time point. When a difference between a first PMI value corresponding to the first time point and a second PMI value corresponding to the second time point exceeds a threshold value, the UE 402 may identify that the PMI value has changed at the first time point as compared with the second time point. For example, when the value of at least one parameter has changed, the UE 402 may identify that the channel state between the base station 401 and the UE 402 has changed.

According to an embodiment, in operation 605, the UE 402 may transmit an indicator indicating whether the channel state has changed, based on a comparison result. For example, the UE 402 may identify whether each of a plurality of parameters has changed at the first time point as compared with the second time point, based on a comparison result of the first values and the second values. For example, the UE 402 may identify that the CQI value has changed and the PMI value has not changed. In this case, the UE 402 may transmit, to the base station 401, a CSC indicator including a CQI field having a value of "0" and a PMI field having a value of "1".

Operation 601 described in FIG. 6 of the disclosure may correspond to operation 419 of FIG. 4. Operation 603 of FIG. 6 may correspond to operation 421 of FIG. 4. Operation 605 of FIG. 6 may correspond to operation 423 of FIG. 4. However, the correspondence between FIG. 4 and FIG. 6 described above is merely an example, and the disclosure is not limited thereto.

FIG. 7 illustrates a method in which a UE acquires an indicator for a change in a channel state, based on a plurality of measurement reports, according to an embodiment.

Referring to FIG. 7, the UE 402 according to an embodiment may receive a plurality of CSI-RSs on at least one resource from the base station 401. The UE 402 may identify or acquire a plurality of CSI reports 701, based on the received a plurality of CSI-RSs. For example, the UE 402 may receive a first CSI-RS at a first time point, and may identify a first CSI report 701-1, based on the first CSI-RS. For example, the UE 402 may receive a second CSI-RS at a second time point, and may identify a second CSI report 701-2, based on the second CSI-RS. For example, the UE 402 may receive a third CSI-RS at a third time point, and may identify a third CSI report 701-3, based on the third CSI-RS. For example, the UE 402 may receive an nth CSI-RS at an nth time point, and may identify an nth CSI report 701-n, based on the nth CSI-RS.

According to an embodiment, the UE 402 may compare, among the plurality of CSI reports 701, a most recently identified CSI report and a second most recently identified CSI report. For example, the UE 402 may compare an (n-1)th CSI report 701-(n-1) corresponding to an (n-1)th time point and an nth CSI report 701-n corresponding to an nth time point. For example, the UE 402 may compare first values of a plurality of parameters included in the (n-1)th CSI report 701-(n-1) and second values of a plurality of parameters included in the nth CSI report 701-n.

According to an embodiment, the UE 402 may identify an n-th CSC indicator 703-n, based on a result of comparing the (n-1)th CSI report 701-(n-1) and the nth CSI report 701-n. For example, the UE 402 may compare the first values and the second values for each parameter, and may determine a field value for each parameter to be "0" in a case where a difference between the first value and the second value for each parameter is less than the threshold value. For example, the UE 402 may compare the first values and the second values for each parameter, and when a difference between the first value and the second value for each parameter is greater than or equal to a threshold value, the UE 402 may determine a field value to be "1" for each parameter.

For example, when a difference between a first value and a second value of a first parameter (e.g., CQI) is less than a threshold value, the UE 402 may determine a CSC field value for a first parameter to be "0". For example, when a difference between a first value and a second value of the first parameter (e.g., CQI) is equal to or greater than a threshold value, the UE 402 may determine the CSC field value for the first parameter to be "1".

According to an embodiment, the UE 402 may identify a plurality of CSC indicators 703, based on CSI reports. For example, the UE 402 may identify a first CSC indicator 703-1 by comparing the first CSI report 701-1 and the second CSI report 701-2. For example, the UE 402 may identify a second CSC indicator 703-2 by comparing the second CSI report 701-2 and the third CSI report 701-3.

According to an embodiment, threshold values for a plurality of parameters (e.g., CQI, CRI, PMI, and/or RI) may be different from each other. For example, the threshold of the first parameter (e.g., CQI) for determining a CSC field value may be different from the threshold of the second parameter (e.g., RI) for determining the CSC field value.

According to an embodiment, information on a threshold value of each of the plurality of parameters may be included in configuration information transmitted from the base station 401 to the UE 402. For example, the configuration information may include configuration information (e.g., CSC-indicatorConfig) for a CSC indicator, and the configuration information (e.g., CSC-indicatorConfig) for the CSC indicator may include information on a threshold value for each parameter for determining a CSC field based on CSI reports.

In the disclosure, it has been described that, when there is no change in the value of a parameter, a field value is indicated as 0, and when there is a change in the value of a parameter, the field value is indicated as 1, but this is only an example. For example, when there is no change in the value of a parameter, the field value may be indicated as 1, and when there is a change in the value of a parameter, the field value may be indicated as 0.

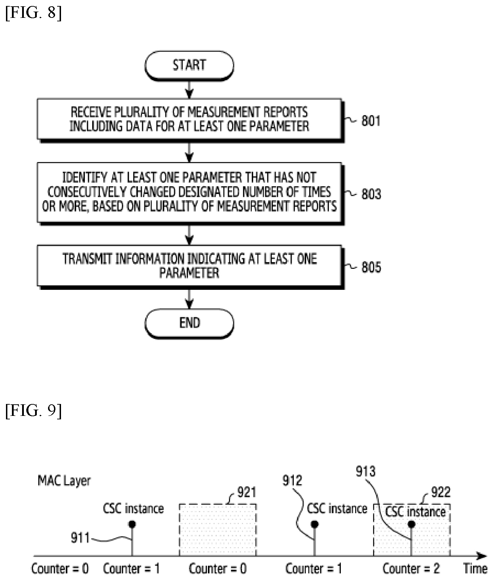

FIG. 8 illustrates a method in which a base station transmits information for triggering an indicator for a change in a channel state according to an embodiment.

Referring to FIG. 8, the base station 401 according to an embodiment may receive a plurality of measurement reports including data for at least one parameter in operation 801. For example, the base station 401 may transmit a plurality of CSI-RSs to the UE 402, and the base station 401 may receive, from the UE 402, a plurality of CSI reports (or a plurality of measurement reports) in response to the plurality of CSI-RSs, respectively.

For example, the plurality of measurement reports may not be a simplified CSI report. That is, a plurality of measurement reports may be reports transmitted by the UE 402 before a CSC indicator and simplified CSI reporting are activated. In another example, the plurality of measurement reports received by the base station 401 in operation 801 may correspond to the CSI reports received in operation 415 of FIG. 4. In another example, the plurality of measurement reports received by the base station 401 in operation 801 may be CSI reports including data for a plurality of parameters (e.g., CQI, CRI, RI, and/or PMI). That is, the plurality of measurement reports may include measurement values for all of a plurality of parameters (e.g., CQI, CRI, RI, and/or PMI) configured based on configuration information (e.g., reportQuantity).

According to an embodiment, in operation 803, the base station 401 may identify, based on a plurality of measurement reports, at least one parameter that has not consecutively changed a designated number of times or more. For example, the base station 401 may identify, among a plurality of parameters included in the plurality of measurement reports, at least one parameter that has not consecutively changed a designated number of times or more. In an example, the identified at least one parameter may be included in a CSC indicator.

For example, the base station 401 may receive, from the UE 402, a first CSI report, a second CSI report, and a third CSI report in sequence. The base station 401 may identify first values for a plurality of parameters (e.g., CQI, CRI, RI, and PMI) included in the first CSI report, and may identify second values for the plurality of parameters (e.g., CQI, CRI, RI, and PMI) included in the second CSI report. The base station 401 may identify third values for the plurality of parameters (e.g., CQI, CRI, RI, and PMI) included in the third CSI report. In this case, the first CSI report may be a response to a first CSI-RS transmitted at a first initial time point, the second CSI report may be a response to a second CSI-RS transmitted at a second initial time point, and the third CSI report may be a response to a third CSI-RS transmitted at a third initial time point. The first values may correspond to the first initial time point at which the first CSI-RS is received, the second values may correspond to the second initial time point at which the second CSI-RS is received, and the third values may correspond to the third initial time point at which the third CSI-RS is received.

In an example, a first value for a first parameter (e.g., CQI) among the first values may have a difference less than or equal to a threshold value from a second value for the first parameter (e.g., CQI) among the second values. Likewise, a third value for the first parameter (e.g., CQI) among the third values may have a difference less than or equal to a threshold value from the second value. In this case, the base station 401 may identify that the value of the first parameter (e.g., CQI) has not consecutively changed a designated number of times (e.g., two times) or more (that is, since the first parameter is identified as not having changed between the first value and the second value, it may be counted as one, and since the first parameter is identified as not having changed between the second value and the third value, it may be counted as two).

In an example, a fourth value for a second parameter (e.g., RI) among the first values may have a difference less than or equal to a threshold value from a fifth value for the second parameter (e.g., RI) among the second values. On the other hand, a sixth value for the second parameter (e.g., RI) among the third values may have a difference exceeding the threshold value from the fifth value. In this case, the base station 401 may identify that the value of the second parameter (e.g., RI) has been identified as unchanged fewer than a designated number of times (e.g., two times). That is, the base station 401 may identify that the value of the second parameter has not been consecutively maintained for a designated number of times.

In an example, the base station 401 may identify, from among a plurality of parameters, a first parameter (e.g., CQI) as at least one parameter to be included in a CSC indicator, and may identify a second parameter (e.g., RI) as a parameter not to be included in the CSC indicator. That is, the base station 401 may request reporting through the CSC indicator for the first parameter (e.g., CQI), which is a stable parameter, and may request transmission of data through a CSI report rather than through the CSC indicator for the second parameter (e.g., RI), which is an unstable parameter.

According to an embodiment, in operation 805, the base station 401 may transmit information indicating at least one parameter that is to be subject to reporting through a CSC indicator. For example, the base station 401 may transmit a message for activating transmission of the CSC indicator, and the message may include information indicating the at least one parameter that is to be subject to reporting through the CSC indicator.

According to an embodiment, information indicating at least one parameter may be delivered from the base station 401 to the UE 402 through RRC signaling, a MAC CE, or downlink control information (DCI). For example, the base station 401 may transmit, to the UE 402, information for indicating the at least one parameter through an RRC message. As another example, the base station 401 may activate a CSC indicator and/or simplified CSI reporting for the UE 402 through DCI including information indicating at least one parameter.

According to an embodiment, the base station 401 may minimize or reduce unnecessary resource waste by causing the CSC indicator and simplified CSI reporting to be performed only for at least one parameter (e.g., a stable parameter or a semi-static parameter) that has not consecutively changed a designated number of times or more. For example, when the CSC indicator and simplified CSI reporting are performed even for an unstable parameter, the base station 401 may need to request, from the UE 402, retransmission of data for parameters omitted from the simplified CSI report, and may need to allocate resources for the transmission of the data. In contrast, when the base station 401 according to an embodiment causes the CSC indicator and simplified CSI reporting to be performed only for at least one parameter that has not consecutively changed a designated number of times or more, unnecessary consumption of radio resources may be reduced.

In FIG. 8 of the disclosure, counting, by the base station 401, the number of times that a value of a parameter (e.g., CQI) does not change may substantially correspond to counting CSC instances by the base station 401 in FIG. 9, which will be described later.

Information indicating at least one parameter described with reference to FIG. 8 of the disclosure may substantially be information for activating transmission of a CSC indicator. For example, when information indicating at least one parameter is delivered to the UE 402, the UE 402 may, in response to a CSI-RS, notify the base station 401, through a CSC indicator, whether a value of the at least one parameter has changed.

In addition, the information indicating at least one parameter described with reference to FIG. 8 of the disclosure may substantially be information for activating a simplified CSI report (or a CSI report excluding data for one or more parameters whose values have not changed, among the at least one parameter). For example, when information indicating at least one parameter is delivered to the UE 402, the UE 402 may, in response to a CSI-RS, transmit, to the base station 401, a CSI report excluding data for one or more parameters whose values have not changed, among the at least one parameter.

Operation 801 of FIG. 8 of the disclosure, in which the base station 401 receives a plurality of measurement reports, may correspond to operation 415 of FIG. 4, in which the UE 402 transmits a CSI report. Operations 803 to 805 of FIG. 8 may correspond to operation 417 of FIG. 4 for handling a CSC indicator. However, the above-described correspondence is merely an example, and the disclosure is not limited thereto.

FIG. 9 illustrates a method in which a MAC layer of a base station counts CSC instances to activate a CSC indicator for at least one parameter or deactivate an activated CSC indicator, according to an embodiment.

Referring to FIG. 9, a protocol of the base station 401 according to an embodiment may include a MAC layer and a PHY layer. For a stable parameter (e.g., a parameter that has not changed) among the plurality of parameters, the MAC layer may receive a CSC instance from the PHY layer.

According to an embodiment, before the CSC indicator and/or the simplified CSI reporting are activated, the PHY layer of the base station 401 may receive a plurality of CSI reports from the UE 402. When it is determined, based on the plurality of CSI reports, that values of a plurality of parameters have not changed (e.g., when the parameters are stable), a CSC instance may be transmitted from the PHY layer to the MAC layer. For example, when a first CSI report and a second CSI report are compared, and a first parameter (e.g., CQI) among the plurality of parameters (e.g., CQI and RI) has not changed, the MAC layer may receive, from the PHY layer, a CSC instance for the first parameter. As another example, when the first CSI report and the second CSI report are compared, and a second parameter (e.g., RI) among the plurality of parameters (e.g., CQI and RI) has changed, the MAC layer may not receive, from the PHY layer, a CSC instance for the second parameter.

According to an embodiment, the base station 401 (or the MAC layer) may identify, from among a plurality of parameters (e.g., CQI and RI), at least one parameter for which CSC instances have been consecutively received a designated number of times or more. The base station 401 may transmit information on the identified at least one parameter to the UE 402, thereby requesting that the UE 402 is to report, through a CSC indicator, whether a value of the at least one parameter has changed and perform simplified CSI reporting for one or more parameters whose values have not changed, among the at least one parameter.

According to an embodiment, the designated number may be configured by the base station 401 for the UE 402 through configuration information. For example, referring to Table 5, the configuration information may include configuration information (e.g., CSC-indicatorConfig) for a CSC indicator. The configuration information (e.g., CSC-indicatorConfig) for the CSC indicator may include information (e.g., CSCinstanceConfig) regarding a CSC instance, and the information on the CSC instance may include information (e.g., counterThreshold) regarding a designated number of times.

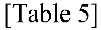

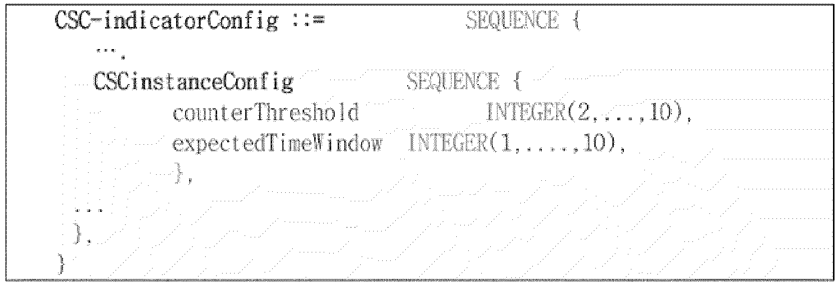

According to an embodiment, after a CSC indicator and/or simplified CSI reporting is activated, the PHY layer of the base station 401 may receive a CSC indicator from the UE 402. When it is determined, based on the CSC indicator, that a value of each of the at least one parameter has not changed (e.g., when the at least one parameter is stable), a CSC instance may be transmitted from the PHY layer to the MAC layer. For example, when a first CSC indicator indicates that a first parameter (e.g., CQI) among at least one parameter (e.g., CQI and RI) has not changed (e.g., when a field corresponding to CQI has a value of 0), a CSC instance may be transmitted from the PHY layer to the MAC layer. For example, when the first CSC indicator indicates that a second parameter (e.g., RI) among the at least one parameter (e.g., CQI and RI) has changed (e.g., when a field corresponding to RI has a value of 1), a CSC instance may not be transmitted from the PHY layer to the MAC layer.

According to an embodiment, after the CSC indicator and/or the simplified CSI report is activated, the base station 401 may deactivate the CSC indicator and/or the simplified CSI report by using a CSC instance.

For example, the base station 401 (or the MAC layer) may receive a first CSC instance 911. After receiving the first CSC instance 911, the MAC layer may monitor the CSC instance for a first time (or a time window) 921. That is, the MAC layer may expect a subsequent CSC instance to be received during the first time 921.

When no CSC instance is received during the first time 921, a field value of a CSC indicator for at least one parameter is "1", and therefore, the base station 401 may identify that a value of at least one parameter has changed. In this case, the base station 401 (or MAC layer) may request the UE 402 to deactivate a CSI indicator and/or simplified CSI reporting for the at least one parameter, through an RRC message, a MAC CE, or DCI. That is, the base station 401 may request the UE 402 not to report, through a CSC indicator, whether a value of the at least one parameter has changed, and to perform CSI reporting including data for the at least one parameter.

According to an embodiment, the base station 401 (or the MAC layer) may (re)activate a CSC indicator and/or simplified CSI reporting by using CSC instances. For example, the MAC layer may receive a second CSC instance 912 and identify the count of the received CSC instances as one. The MAC layer may receive a third CSC instance 913 within a second time 922 after the second CSC instance 912 is received. In this case, the MAC layer may identify the count of the received CSC instances as two.

When the number of times that CSC instances are consecutively received (e.g., the number of times that at least one parameter has not consecutively changed) is greater than or equal to a designated number (e.g., two times), the MAC layer may transmit, to the UE 402, a message (or an activation message) requesting transmission of a CSC indicator for the at least one parameter.

According to an embodiment, when a CSC instance is received, the MAC layer may increase the count by 1, and when no CSC instance is received, the MAC layer may configure the count as 0.

According to an embodiment, a time (or a time window) during which reception of a CSC instance is expected may be configured by the base station 401 for the UE 402 through configuration information. For example, referring to Table 5, the configuration information may include configuration information (e.g., CSC-indicatorConfig) for a CSC indicator. The configuration information (e.g., CSC-indicatorConfig) for the CSC indicator may include information (e.g., CSCinstanceConfig) regarding a CSC instance, and the information on the CSC instance may include information (e.g., expectedTimeWindow) regarding a designated number of times.

According to an embodiment, when a value of one or more parameters has changed or when a message for a measurement report including data for the one or more parameters is received from the UE 402, the base station 401 may transmit a message (e.g., a deactivation message) requesting transmission of a measurement report including data for the one or more parameters. For example, the base station 401 may identify whether a value of at least one parameter has changed by counting the CSC instances described above. When a value of a first parameter among the at least one parameter has changed, the base station 401 may request that the UE 402 stop reporting through a CSC indicator and report data through a CSI report, because the first parameter is no longer a stable parameter.

For example, the base station 401 may receive, from the UE 402, a message (e.g., a deactivation request message) indicating that reporting through a CSI report is required for one or more parameters. Based on receiving the deactivation request message, the base station 401 may request that the UE 402 stops reporting through a CSC indicator for the one or more parameters and reports data through a CSI report. That is, the UE 402 may compare values of the one or more parameters and identify that a value of at least one of the one or more parameters has changed. In this case, the UE 402 may determine that a CSI report including data for the one or more parameters is required and may transmit the deactivation request message to the base station 401.

According to an embodiment, a deactivation message transmitted by the base station 401 to the UE 402 may be applied to each of at least one parameter. For example, the base station 401 may identify that a value of a first parameter (e.g., CQI) among at least one parameter (e.g., CQI and RI) has changed, and may identify that a value of a second parameter (e.g., RI) has not changed. In this case, the base station 401 may transmit, to the UE 402, a message (e.g., a deactivation message) requesting discontinuation of reporting through a CSC indicator with regard to only the second parameter (e.g., RI) among at least one parameter.

That is, the deactivation message may be individually applied to each of the at least one parameter.

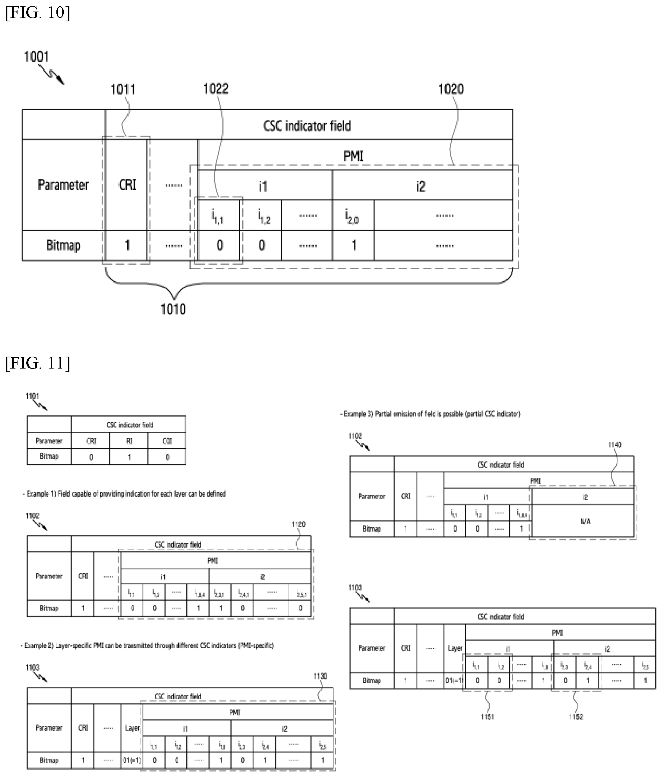

FIG. 10 illustrates a field of a CSC indicator according to an embodiment.

Referring to FIG. 10, a CSC indicator 1001 according to an embodiment may include fields for at least one parameter (e.g., CRI and PMI). For example, the CSC indicator 1001 may include a 1-bit field for at least one parameter. For example, the CSC indicator 1001 may include a first 1-bit field 1011 for CRI. When a bit value of the first field 1011 is 0, it may indicate that a value of the CRI has not changed from a previous CRI value, whereas when the bit value of the first field 1011 is 1, it may indicate that the value of the CRI has changed from the previous CRI value.

For example, the CSC indicator 1001 may include a 1-bit field for each of indices 1020 included in the PMI. For example, the CSC indicator 1001 may include a second 1-bit field 1022 for an index of a beam in an azimuth dimension of i1. When a bit value of the second field 1022 is 0, the second field 1022 may indicate that the index of the beam in the azimuth dimension has not changed from a previous index of the beam, and when the bit value of the second field 1022 is 1, the second field 1022 may indicate that the index of the beam in the azimuth dimension has changed from the previous index of the beam.

According to an embodiment, the at least one parameter may be based on information (e.g., reportQuantity) regarding a plurality of parameters included in configuration information and/or on a wideband/narrowband. For example, the at least one parameter included in the CSC indicator 1001 may be at least one of the plurality of parameters included in the configuration information.

According to an embodiment, the type(s) and/or number of the indices 1020 included in the PMI may be determined based on a codebook type. For example, the codebook type may include type 1 - single panel, type 1 - multi panel, type 2, and/or enhanced type 2. For example, in a type 1 codebook, a predefined matrix (e.g., a predefined table) may be used, and the type 1 codebook may be for single-user multi-input multi-output (SU-MIMO). For example, in a type 2 codebook, a mathematical formula may be used together with a plurality of parameters, and the type 2 codebook may be used for multi-user MIMO (MU-MIMO).

According to an embodiment, PMI indices or PMI parameters to be reported for each type of codebook may be as shown in Table 6. However, Table 6 is merely an example, and the disclosure is not limited thereto.

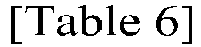

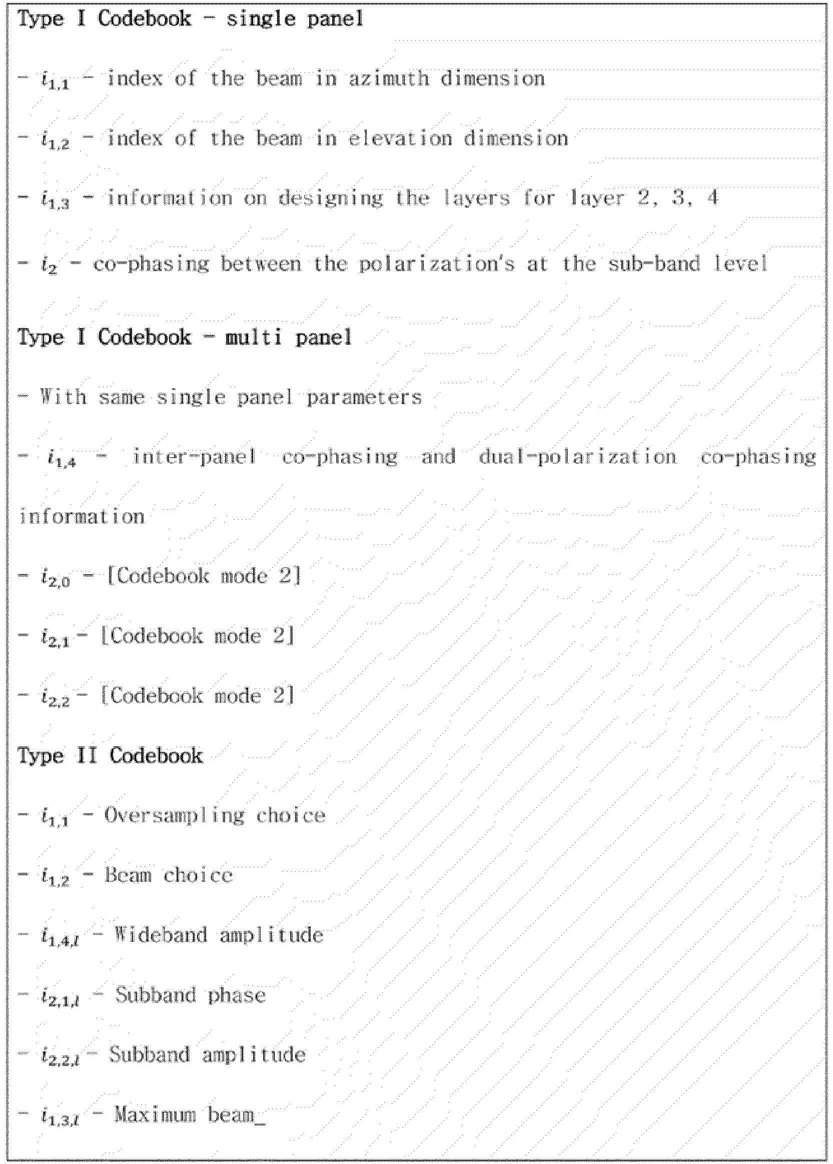

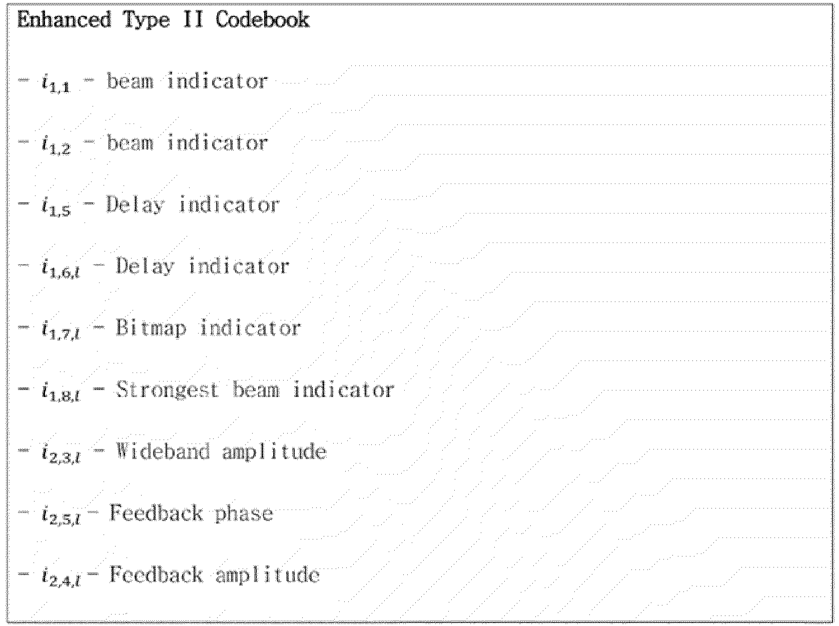

FIG. 11 illustrates types of CSC indicators according to an embodiment.

Referring to FIG. 11, a first indicator 1101 of a first type according to an embodiment may have a field value of each of at least one parameter (e.g., CRI, RI, and CQI). For example, the first indicator 1101 may include a 1-bit CRI value, a 1-bit RI value, and a 1-bit CQI value. For example, the first indicator 1101 of the first type may correspond to a case in which information (e.g., reportQuantity) regarding parameters subject to CSI reporting included in configuration information is cri-RI-CQI.

According to an embodiment, a second indicator 1102 of a second type may have a field value of each of at least one parameter (e.g., CRI, RI, CQI, and PMI). For example, the second indicator 1102 may include a 1-bit CRI value, a 1-bit RI value, and a 1-bit CQI value. For example, the second indicator 1102 may include a 1-bit value of each of a plurality of indices included in the PMI.

The second indicator 1102 of the second type in FIG. 11 may correspond to the CSC indicator 1001 in FIG. 10.

According to an embodiment, a third indicator 1103 of a third type may have a field value of each of at least one parameter (e.g., CRI, RI, CQI, and PMI). For example, the third indicator 1103 of the third type may include, for each layer, each of a plurality of indices included in PMI. For example, in a PMI field 1120 of the second indicator 1102 of the second type, a plurality of indices may be included by being listed together. On the other hand, in a PMI field 1130 of the third indicator 1103 of the third type, the plurality of indices may be included by being divided for respective layers.

According to an embodiment, the base station 401 may variably change at least one parameter included in a CSC indicator for the UE 402. For example, the base station 401 may configure the UE 402 to omit at least some of at least one parameter (e.g., CRI, PMI) included in the CSC indicator. In another example, the base station 401 may add at least one parameter to the CSC indicator.

According to an embodiment, based on configuration or control of the base station 401, a field may be omitted from the second indicator 1102 of the second type on a higher-level parameter basis. For example, based on configuration or control of the base station 401, a field 1140 of an i2 parameter may be omitted from the second indicator 1102 of the second type.

According to an embodiment, based on configuration or control of the base station 401, a field may be omitted from the third indicator 1103 of the third type on a lower-level parameter basis. For example, based on configuration or control of the base station 401, first fields 1151 among fields of an i1 parameter and second fields 1152 among fields of an i2 parameter may be omitted.

According to an embodiment, a parameter omitted from the CSC indicator may be a parameter whose value has changed (e.g., an unstable parameter). For example, the base station 401 may identify that a value of at least one of the at least one parameter reported through the CSC indicator has changed. In this case, the base station 401 may request omission of reporting through the CSC indicator for the parameter whose value has changed. In this case, a value of the parameter identified as having changed may be reported to the base station 401 through a CSI report.

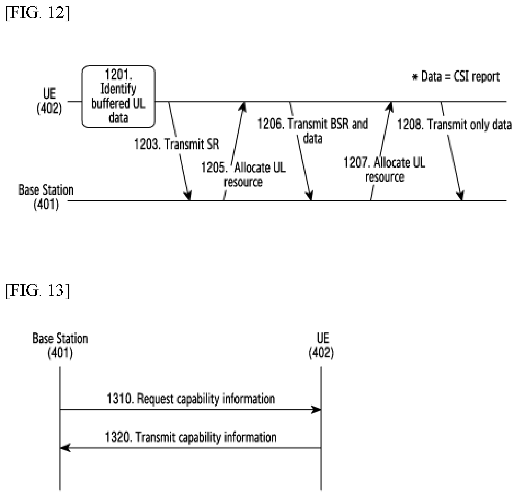

FIG. 12 illustrates a base station that allocates uplink resources for simplified CSI reporting and a UE that performs CSI reporting according to an embodiment.

Referring to FIG. 12, the UE 402 according to an embodiment may identify buffered uplink (UL) data in operation 1201. For example, the UE 402 may transmit, to the base station 401, a simplified CSI report excluding one or more parameters (e.g., CQI and PMI) whose values have not changed, among at least one parameter. In an embodiment, the at least one parameter may be a parameter included in a CSC indicator.

According to an embodiment, while the UE 402 is performing simplified CSI reporting, the base station 401 may identify that the channel state has changed, and may transmit a message for deactivating (or releasing) the simplified CSI reporting to the UE 402.

In this case, the UE 402 may need to additionally transmit data for one or more parameters (e.g., CQI and PMI) in a CSI report as compared with a simplified CSI report, and the UE 402 may need to request allocation of resources for the additionally transmitted data from the base station 401.

According to an embodiment, the UE 402 may transmit a scheduling request (SR) to the base station 401 to request a resource for transmitting data for one or more parameters (e.g., CQI and PMI) in operation 1203. For example, the UE 402 may request, from the base station 401, additional resources in addition to resources allocated for a simplified CSI report.

According to an embodiment, the base station 401 may allocate an UL resource to the UE 402 in operation 1205. For example, the base station 401 may allocate additional UL resources for the UE 402 to transmit data for one or more parameters (e.g., CQI and PMI).

According to an embodiment, the UE 402 may transmit data for one or more parameters (e.g., CQI and PMI) to the base station 401, based on the allocated additional UL resources, in operation 1206. For example, the UE 402 may transmit, to the base station 401, not only data for parameters (e.g., RI and CRI) transmitted in the simplified CSI report, but also data for one or more parameters (e.g., CQI and PMI).

According to an embodiment, the UE 402 may transmit a buffer status report (BSR) to the base station 401 while transmitting data. In another example, the UE 402 may transmit only data without a BSR.

According to an embodiment, the base station 401 may allocate an UL resource for CSI reporting to the UE 402 in operation 1207, and the UE 402 may transmit a CSI report to the base station 401 in operation 1208. For example, the UE 402 may transmit data for a plurality of parameters (e.g., CQI, CRI, PMI, and RI) without a BSR, based on the allocated UL resources.

According to an embodiment, the UE 402 may receive, from the base station 401, an activation message for a simplified CSI report, while performing a CSI report including data for a plurality of parameters (e.g., CQI, CRI, PMI, and RI) to the base station 401. In this case, the UE 402 may perform only CSI reporting in which data for one or more parameters (e.g., CQI and CRI) among a plurality of parameters (e.g., CQI, CRI, PMI, and RI) is excluded. Accordingly, some of the UL resources allocated to the UE 402 by the base station 401 before receiving the activation message may not be used. For example, one or more parameters (e.g., CQI and CRI) whose values have not changed may be among at least one parameter (e.g., CQI, CRI, and RI) subject to reporting through a CSC indicator.

According to an embodiment, when some of the UL resources are not used, the UE 402 may request the base station 401 to reallocate the unused resources in order to use radio resources efficiently. In another example, the UE 402 may not request reallocation from the base station 401, since a delay or latency may occur when a new resource is allocated in response to a request for reallocation, even if some of the UL resources are not used. In this case, the UE 402 may perform simplified CSI reporting, based on resources allocated before the activation message is received.

Similarly, when the base station 401 activates the CSC indicator, the base station 401 may receive, from the UE 402, a UL resource allocation request for the CSC indicator and may allocate UL resources. In addition, when the CSC indicator is deactivated, the base station 401 may receive, from the UE 402, a request for reallocation of UL resources for the CSC indicator, because UL resources for the CSC indicator are no longer needed. In this case, the base station 401 may reallocate the UL resources for the CSC indicator to be used for transmission of other data. In addition, even when the base station 401 deactivates the CSC indicator, in case that the UE 402 requests reallocation, a delay or latency may occur although the UL resources for the CSC indicator are not used. Accordingly, the UE 402 may not request reallocation of the UL resources for the CSC indicator.

According to an embodiment, the base station 401 may monitor a CSC indicator and/or a size of CSI reporting, without an SR request from the UE 402, and may allocate an UL resource through DCI. For example, when the base station 401 transmits a message for activating the CSC indicator to the UE 402, the base station 401 may identify a first resource required for the CSC indicator and a second resource required for simplified CSI reporting. The base station 401 may allocate new UL resources to the UE 402, based on the first resource and the second resource, even without an SR from the UE 402.

In another example, when the base station 401 transmits a message for deactivating the CSC indicator to the UE 402, the base station 401 may identify a first resource that has been used for the CSC indicator and a third resource required for CSI reporting for all of the plurality of parameters. Even without an SR from the UE 402, the base station 401 may allocate new UL resources to the UE 402, based on the first resource and the third resource.

The activation or deactivation of the CSC indicator described in FIG. 12 of the disclosure may be applied to each of the parameters associated with the channel state, and uplink resource allocation may be newly performed for each parameter. For example, the base station 401 may request the UE 402 to report a first parameter (e.g., CQI) through a CSC indicator, and in this case, the base station 401 may identify a need for uplink resource allocation by receiving an SR or monitoring a size of the CSC indicator, and may perform the uplink resource allocation.

FIG. 13 illustrates a method of exchanging capability information for a CSC indicator and simplified CSI reporting between a base station and a UE according to an embodiment.

Referring to FIG. 13, in operation 1310, the base station 401 according to an embodiment may transmit a capability information request (e.g., UECapabilityEnquiry) to the UE 402 when the UE 402 is connected to the base station 401 (or when the UE 402 is camped on or attached). For example, the base station 401 may inquire whether the UE 402 is a UE capable of transmitting an indicator (e.g., a CSC indicator) for a change in a channel state. For example, when the UE 402 performs initial access to the base station 401, the base station 401 may transmit a request for capability information to the UE 402.

For example, Table 7 may be an IE for a capability inquiry request transmitted to the UE 402, and information for inquiring whether the UE 402 has a capability of transmitting an indicator for a change in a channel state may be included in Table 7. However, this is only an example, and the capability information request (e.g., UECapabilityEnquiry) transmitted by the base station 401 may include only some of the information in Table 7, or may further include additional IEs.

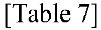

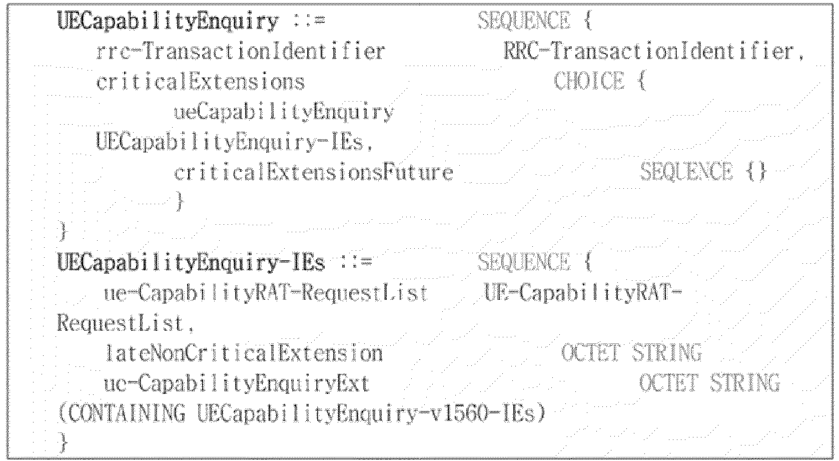

According to an embodiment, the UE 402 may transmit capability information of the UE 402 (e.g., UECapabilityInformation) in response to the capability information request in operation 1320. For example, the capability information of UE 402 may include information on whether the UE 402 is capable of transmitting an indicator (e.g., a CSC indicator) for a change in a channel state.

For example, Table 8 may be an IE for capability information transmitted by the UE 402, and information on whether the UE 402 is capable of transmitting an indicator for a change in a channel state may be included in Table 8. However, this is only an example, and the capability information transmitted by the UE 402 may include only some of the information in Table 8, or may further include additional IEs.

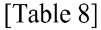

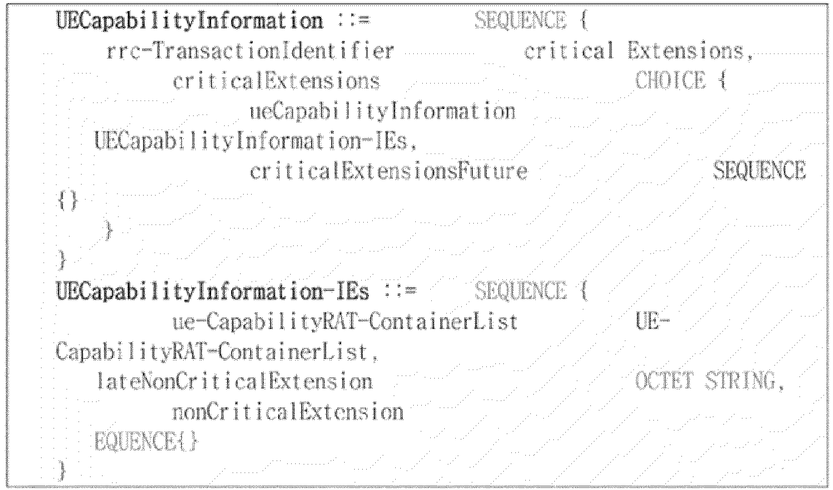

According to an embodiment, whether the base station 401 transmits information for enabling a CSC indicator to the UE 402 may be determined based on whether the UE 402 is capable of transmitting a CSC indicator. For example, the base station 401 may identify, based on the capability information transmitted by the UE 402, whether the UE 402 is capable of transmitting a CSC indicator and/or a simplified CSI report. When the UE 402 is capable of transmitting a CSC indicator and/or a simplified CSI report, the base station 401 may configure the UE 402 with information (e.g., a CSC-indicatorConfig) for enabling a CSC indicator. In another example, when the UE 402 is not capable of transmitting a CSC indicator and/or a simplified CSI report, the base station 401 may not configure the UE 402 with information for enabling a CSC indicator.

According to an embodiment, a method performed by a terminal in a wireless communication system may include receiving, from a base station, information for triggering transmission of an indicator for a change in a channel state, transmitting, to the base station, at least one indicator for the change in the channel state, based on the information for the transmission of the indicator, and transmitting, to the base station, a measurement report excluding data for one or more parameters whose values have not changed, among the at least one parameter, wherein the information for triggering the transmission includes information on at least one parameter for the indicator among a plurality of parameters associated with the channel state, and wherein the at least one indicator indicates whether a value of the at least one parameter has changed.

According to an embodiment, the method may further include receiving configuration information including information for enabling the indicator for the change of the channel state, wherein the at least one indicator is transmitted based on the information for enabling the indicator, and wherein the transmitting of the at least one indicator may include receiving, from the base station, a first channel state information reference signal (CSI-RS), comparing first values for the at least one parameter identified based on the first CSI-RS with second values for the at least one parameter identified based on a second CSI-RS received before the first CSI-RS, and transmitting an indicator indicating whether the channel state has changed based on a result of the comparing.

According to an embodiment, the method may further include, in case that a value of the one or more parameters has changed or a message for the measurement report including the data for the one or more parameters is transmitted to the base station, receiving, from the base station, a message for requesting transmission of the measurement report including the data for the one or more parameters.

According to an embodiment, the method may further include, in case that a scheduling request (SR) for a resource for the measurement report including the data is transmitted to the base station, transmitting the measurement report, based on the information on the resource received in response to the SR, and transmitting the measurement report, based on the information on the resource received from the base station and based on at least one of a size of the at least one indicator and a size of the measurement report).

According to an embodiment, the method may further include receiving, from the base station, a request for capability information on transmission of the indicator in case that the terminal performs an initial access to a cell of the base station, and transmitting the capability information to the base station, wherein the at least one indicator includes a 1-bit field for each of the at least one parameter, and the plurality of parameters associated with the channel state may be changed through downlink control information (DCI) or radio resource control (RRC) signaling.

According to an embodiment, a terminal in a wireless communication system may include a transceiver and a controller coupled to the transceiver, wherein the controller is configured to receive, from a base station, information for triggering transmission of an indicator for a change in a channel state, to transmit, to the base station, at least one indicator for the change in the channel state, based on the information for triggering the transmission of the indicator, and to transmit, to the base station, a measurement report excluding data for one or more parameters whose values have not changed, among the at least one parameter, wherein the information for triggering the transmission includes information on at least one parameter for the indicator among a plurality of parameters associated with the channel state, and the at least one indicator indicates whether a value of the at least one parameter has changed.

According to an embodiment, the controller may be configured to receive configuration information including information for enabling the indicator for the change in the channel state, and the at least one indicator is transmitted based on the information for enabling the indicator. The controller may be configured to receive a first channel state information reference signal (CSI-RS) from the base station, compare first values for the at least one parameter identified based on the first CSI-RS with second values for the at least one parameter identified based on a second CSI-RS received before the first CSI-RS, and transmit an indicator indicating whether the channel state has changed based on a comparison result.

According to an embodiment, the controller may be configured to receive, from the base station, a message requesting transmission of the measurement report including the data for the one or more parameters, in case that a value of the one or more parameters has changed or a message for the measurement report including the data for the one or more parameters is transmitted to the base station.

According to an embodiment, the controller may be configured to, in case that a scheduling request (SR) for a resource for the measurement report including the data is transmitted to the base station, transmit the measurement report based on information on the resource received in response to the SR, and to transmit the measurement report based on the information on the resource received from the base station and based on at least one of a size of the at least one indicator and a size of the measurement report.

According to an embodiment, in case that an initial access to a cell of the base station is performed, the controller may be configured to receive, from the base station, a request for capability information on transmission of the indicator, and to transmit the capability information to the base station, wherein the at least one indicator includes a 1-bit field for each of the at least one parameter, and the plurality of parameters associated with the channel state is changed through downlink control information (DCI) or radio resource control (RRC) signaling.

A method performed by a base station in a wireless communication system may include transmitting, to a terminal, information for triggering an indicator for a change in a channel state, receiving, from the terminal, at least one indicator for the change in the channel state based on the information for triggering the indicator, and receiving, from the terminal, a measurement report excluding data for one or more parameters whose values have not changed, among the at least one parameter, wherein the information for triggering the indicator includes information on at least one parameter for the indicator among a plurality of parameters associated with the channel state, and wherein the at least one indicator indicates whether a value of the at least one parameter has changed.

According to an embodiment, the at least one indicator may indicate whether the at least one parameter associated with the channel state has changed, and wherein the transmitting of the information for triggering the indicator includes receiving a plurality of measurement reports including data for the at least one parameter, and transmitting the information for the at least one parameter in case that the at least one parameter is determined, based on the plurality of measurement reports, to have not consecutively changed a designated number of times or more.

According to an embodiment, the method may further include, in case that a value of the one or more parameters has changed or a message for a measurement report including the data for the one or more parameters is received from the terminal, transmitting, to the terminal, a message requesting transmission of the measurement report including the data for the one or more parameters.

According to an embodiment, the method may further include, in case that a scheduling request (SR) for a resource for the measurement report including the data is received from the terminal, transmitting information on the resource in response to the SR, and transmitting the information on the resource received from the base station, based on at least one of a size of the at least one indicator and a size of the measurement report.

According to an embodiment, the method may further include, in case that the terminal performs initial access, requesting, from the terminal, capability information of the terminal regarding transmission of the indicator, and receiving, from the terminal, the capability information of the terminal, wherein the information for enabling the indicator is determined based on the capability information, wherein the at least one indicator includes a 1-bit field for each of the at least one parameter, and wherein the plurality of parameters associated with the channel state is changed through downlink control information (DCI) or radio resource control (RRC) signaling.

According to an embodiment, a base station in a wireless communication system may include a transceiver and a controller coupled to the transceiver, wherein the controller is configured to transmit, to a terminal, information for triggering an indicator for a change in a channel state, to receive, from the terminal, at least one indicator for the change in the channel state, based on the information for triggering the indicator, and to receive, from the terminal, a measurement report excluding data for one or more parameters whose values have not changed, among the at least one parameter, wherein the information for triggering the indicator includes information on at least one parameter for the indicator among a plurality of parameters associated with the channel state, and wherein the at least one indicator indicates whether a value of the at least one parameter has changed.

According to an embodiment, the at least one indicator may indicate whether the at least one parameter associated with the channel state has changed, and the controller may be configured to receive a plurality of measurement reports including data for the at least one parameter and, based on the plurality of measurement reports, to transmit the information on the at least one parameter in case that the at least one parameter has not consecutively changed a designated number of times or more.

According to an embodiment, the controller may be configured to transmit, to the terminal, a message requesting transmission of the measurement report including the data for the one or more parameters, in case that a value of the one or more parameters has changed or a message for a measurement report including the data for the one or more parameters is received from the terminal.

According to an embodiment, the controller may be configured to, in case that a scheduling request (SR) for a resource for the measurement report including the data is received from the terminal, transmit information on the resource in response to the SR, and transmit the information on the resource received from the base station, based on at least one of a size of the at least one indicator and a size of the measurement report.

According to an embodiment, the controller may be configured to, in case that the terminal performs initial access, request, from the terminal, capability information of the terminal regarding transmission of the indicator, and receive, from the terminal, the capability information of the terminal, wherein the information for enabling the indicator is determined based on the capability information, wherein the at least one indicator includes a 1-bit field for each of the at least one parameter, and wherein the plurality of parameters associated with the channel state is changed through downlink control information (DCI) or radio resource control (RRC) signaling.

Although the specification and attached drawings have disclosed the embodiments of the disclosure, and have used specific terms, these are to describe the technical contents of the disclosure easily and help the understanding of the disclosure but are not intended to limit the scope of the disclosure thereto. It will be apparent to those skilled in the art that other variants based on the technical idea of the disclosure may be implemented, in addition to the embodiments set firth herein.

## Claims

1. A method performed by a terminal in a wireless communication system, the method comprising:
receiving, from a base station, information for triggering transmission of an indicator for a change in a channel state, wherein the information for triggering the transmission includes information on at least one parameter for the indicator among a plurality of parameters associated with the channel state;
transmitting, to the base station, at least one indicator for the change in the channel state, based on the information for triggering the transmission of the indicator, wherein the at least one indicator indicates whether a value of the at least one parameter has changed; and
transmitting, to the base station, a measurement report excluding data for one or more parameters whose values have not changed, among the at least one parameter.

2. The method of claim 1, further comprising:
receiving configuration information including information for enabling the indicator for the change in the channel state,
wherein the at least one indicator is transmitted based on the information for enabling the indicator, and
wherein the transmitting of the at least one indicator comprises:
receiving, from the base station, a first channel state information reference signal (CSI-RS);
comparing first values for the at least one parameter identified based on the first CSI-RS with second values for the at least one parameter identified based on a second CSI-RS received before the first CSI-RS; and
transmitting an indicator indicating whether the channel state has changed based on a result of the comparing.

3. The method of claim 1, further comprising:
in case that a value of the one or more parameters has changed or a message for a measurement report including the data for the one or more parameters is transmitted to the base station, receiving, from the base station, a message requesting transmission of the measurement report including the data for the one or more parameters.

4. The method of claim 3, further comprising:
in case that a scheduling request (SR) for a resource for the measurement report including the data is transmitted to the base station, transmitting the measurement report, based on information on the resource received in response to the SR; and
transmitting the measurement report, based on the information on the resource received from the base station and based on at least one of a size of the at least one indicator or a size of the measurement report.

5. A terminal in a wireless communication system, comprising:
a transceiver; and
a controller coupled to the transceiver,
wherein the controller is configured to:
receive, from a base station, information for triggering transmission of an indicator for a change in a channel state, wherein the information for triggering the transmission includes information on at least one parameter for the indicator among a plurality of parameters associated with the channel state;
transmit, to the base station, at least one indicator for the change in the channel state, based on the information for triggering the transmission of the indicator; and
transmit, to the base station, a measurement report excluding data for one or more parameters whose values have not changed, among the at least one parameter,
wherein the at least one indicator indicates whether a value of the at least one parameter has changed.

6. The terminal of claim 5, wherein the controller is configured to:
receive configuration information including information for enabling the indicator for the change in the channel state,
wherein the at least one indicator is transmitted based on the information for enabling the indicator, and
wherein the controller is further configured to:
receive, from the base station, a first channel state information reference signal (CSI-RS);
compare first values for the at least one parameter identified based on the first CSI-RS with second values for the at least one parameter identified based on a second CSI-RS received before the first CSI-RS; and
transmit an indicator indicating whether the channel state has changed based on a result of the comparison.

7. The terminal of claim 5, wherein the controller is configured to:
in case that a value of the one or more parameters has changed or a message for a measurement report including the data for the one or more parameters is transmitted to the base station, receive, from the base station, a message requesting transmission of the measurement report including the data for the one or more parameters.

8. The terminal of claim 7, wherein the controller is configured to:
in case that a scheduling request (SR) for a resource for the measurement report including the data is transmitted to the base station, transmit the measurement report based on information on the resource received in response to the SR; and
transmit the measurement report, based on the information on the resources received from the base station and based on at least one of a size of the at least one indicator or a size of the measurement report.

9. A method performed by a base station in a wireless communication system, the method comprising:
transmitting, to a terminal, information for triggering an indicator for a change in a channel state, wherein the information for triggering the indicator includes information on at least one parameter for the indicator among a plurality of parameters associated with the channel state;
receiving, from the terminal, at least one indicator for the change in the channel state, based on the information for triggering the indicator, wherein the at least one indicator indicates whether a value of the at least one parameter has changed; and
receiving, from the terminal, a measurement report excluding data for one or more parameters whose values have not changed, among the at least one parameter.

10. The method of claim 9, wherein the at least one indicator indicates whether the at least one parameter associated with the channel state has changed, and
wherein the transmitting of the information for triggering the indicator comprises:
receiving a plurality of measurement reports including data for the at least one parameter; and
transmitting the information on the at least one parameter in case that the at least one parameter is determined, based on the plurality of measurement reports, to have not consecutively changed a designated number of times or more.

11. The method of claim 9, further comprising:
in case that a value of the one or more parameters has changed or a message for a measurement report including the data for the one or more parameters is received from the terminal, transmitting, to the terminal, a message requesting transmission of the measurement report including the data for the one or more parameters.

12. The method of claim 11, further comprising:
in case that a scheduling request (SR) for a resource for the measurement report including the data is received from the terminal, transmitting information on the resource in response to the SR; and
transmitting the information on the resource received from the base station, based on at least one of a size of the at least one indicator or a size of the measurement report.

13. A base station in a wireless communication system, comprising:
a transceiver; and
a controller coupled to the transceiver,
wherein the controller is configured to:
transmit, to a terminal, information for triggering an indicator for a change in a channel state, wherein the information for triggering the indicator includes information on at least one parameter for the indicator among a plurality of parameters associated with the channel state;
receive, from the terminal, at least one indicator for the change in the channel state, based on the information for triggering the indicator, wherein the at least one indicator indicates whether a value of the at least one parameter has changed; and
receive, from the terminal, a measurement report excluding data for one or more parameters whose values have not changed, among the at least one parameter.

14. The base station of claim 13, wherein the at least one indicator indicates whether the at least one parameter associated with the channel state has changed, and
wherein the controller is configured to:
receive a plurality of measurement reports including data for the at least one parameter; and
based on the plurality of measurement reports, transmit the information on the at least one parameter in case that the at least one parameter has not consecutively changed a designated number of times or more.

15. The base station of claim 13, wherein the controller is configured to:
in case that a value of the one or more parameters has changed or a message for a measurement report including the data for the one or more parameters is received from the terminal, transmit, to the terminal, a message requesting transmission of the measurement report including the data for the one or more parameters.
